# EUROPÄISCHE PATENTSCHRIFT

(11) **EP 2 101 983 B1**
(45) Veröffentlichungstag und Bekanntmachung des Hinweises auf die Patenterteilung: **06.04.2016**
(21) Anmeldenummer: 07819204.4
(22) Anmeldetag: 22.10.2007
(51) Int. Cl.: B29C 47/50, B29C 47/42, B29C 47/10

(54) **MISCHUNG VON KUNSTSTOFF MIT HOLZPARTIKELN**
MIXTURE OF PLASTIC WITH WOOD PARTICLES
MÉLANGE DE MATIÈRE PLASTIQUE AVEC DES PARTICULES DE BOIS

(30) Priorität: 15.11.2006 DE 102006054204; 15.10.2007 EP 07020157
(43) Veröffentlichungstag der Anmeldung: 23.09.2009
(60) Teilanmeldung: 15001555.0
(73) Patentinhaber: Entex Rust & Mitschke GmbH, 44805 Bochum (DE); Novo-Tech GmbH & Co. KG, 06449 Aschersleben (DE)
(72) Erfinder: RUST, Harald, 44805 Bochum (DE); SASSE, Holger, 06449 Gross-Schierstedt (DE)
(74) Vertreter: Kaewert, Klaus
(86) Internationale Anmeldenummer: PCT/EP2007/009140
(87) Internationale Veröffentlichungsnummer: WO 2008/058609

(56) Entgegenhaltungen:
- EP-A- 1 262 294
- WO-A-02/103113
- DE-A1- 10 356 423
- DE-A1- 19 534 644
- DE-A1-102004 034 039
- FR-A- 2 564 374
- US-B1- 6 479 002

## Beschreibung

Die Erfindung betrifft die Mischung von Kunststoff mit Holzpartikeln oder anderen Pflanzenpartikeln oder dergleichen. Soweit im weiteren nur Holz oder nur Holzpartikel angesprochen sind, schließt das andere Pflanzen und Pflanzenpartikel ein.

Kunststoffe finden vielfältige Anwendung
Formteile, Werkstücke, Blöcke, Tafeln, Folien, Bahnen, Beläge, Rohre, Schläuche, Stäbe, Stangen , Profile, Bänder, Schnüre, Drähte, Borsten, Netze Klebstoffe, Lacke, Leime, Kleister, Kitte, Bindemittel Farben, Putze, Spachtel, Verguß- und Versiegelungsmassen, Schmelz- und Beschichtungsstoffe, Gele, Fäden, Fasern, Garne, Seiden, Stränge, Matten, Vliese, Gewebe

Die Kunststoffe können aus Monomeren und/oder aus Polymeren bestehen. Häufig handelt es sich um ein Gemisch, wobei auch Mischungen mit anderen Stoffen als Kunststoffen vorkommen. Das gilt besonders für die Herstellung von Kunststoffschaum.

Zur Aufarbeitung von Kunststoffen finden Extruder bevorzugte Anwendung.
Mit einem Extruder lassen sich die eingesetzten Stoffe sehr vorteilhaft aufschmelzen, mischen bzw. homogenisieren und dispergieren.

Außerdem kann das Einsatzgut zugleich erwärmt oder gekühlt werden. Zur Erwärmung bzw. Kühlung finden sich in dem Extrudermantel und ggfs. auch in Spindeln Kühlleitungen bzw. Heizleitungen. Zusätzlich bewirkt die von den Extruderspindeln auf das Einsatzgut ausgeübte Verformung eine erhebliche Erwärmung.

Im Extruder lassen sich auch sehr schwierige Stoffe miteinander vermischen. Zu den schwierig zu mischenden Stoffen gehören Holz und Kunststoff. Das Holz wird dabei in kleinen Partikeln in den Extruder geführt und dort mit dem Kunststoff umhüllt.
Um die Umhüllung zu bewirken, muß der Kunststoff stark plastifiziert werden. Das geschieht unter entsprechender Erwärmung und unter Druck. Die Wärme wird allerdings von dem Holz nur sehr schlecht weitergegeben. Darüber hinaus ist das Holz stark porenhaltig.
Nach einem älteren Vorschlag wird eine Gefahr gesehen, daß der Kunststoff überproportional in die Poren gedrückt wird und ungleichmäßig verteilt wird und keine allseitige Umhüllung der Holzpartikel stattfindet.

Die Holz-Kunststoffmischung wird auch als Holzsubstitut bezeichnet.

Holz findet in diversen Bereichen Anwendung. Dazu gehören Möbel, Innenausbau, Messebau, sogar Kfz-Auskleidungen.
Bei den Möbeln ist zu unterscheiden zwischen Möbel, bei denen das Holz lediglich als Konstruktionsmaterial oder auch Sichtflächen bildend Anwendung findet.
In Polstermöbeln findet Holz zumeist nur als Konstruktionsmaterial Anwendung. Üblicherweise besitzen alle Polstermöbel eine feste Unterkonstruktion, z.B. einen Rahmen, auch Gestell genannt. In und an dem Gestell werden wahlweise Sitzflächen, Rückenlehnen und Armlehnen sowie die Füße montiert. Wahlweise bildet das Gestell auch unmittelbar die Sitzfläche, Rückenlehnen und Armlehnen oder umgekehrt. Das Material, aus dem der Rahmen gefertigt wird, ist das Konstruktionsmaterial.
Traditionell werden Rahmen für Polstermöbel aus Holz gefertigt. Verwendet werden Bretter und Stäbe. Holz hat den Vorteil, daß die einzelnen Teile miteinander sowie mit dem Polster und dem Polsterbezug durch sogenanntes Tackern verbunden werden können. Zum Tackern dienen U-förmige Klammem. Die Klammer ersetzen die Polsternägel aus früherer Zeit.

Andere Möbel zeigen Holz als Sicht- und Dekor- bzw. Schmuckflächen.
Die damit gegebenen Anforderungen werden zum Teil nur von bestimmten seltenen Holzsorten verfüllt. Seltene Hölzer sind relativ teuer. Deshalb gehört es schon lange zum Stand der Technik, Furniere aus den seltenen Hölzern zu schneiden, welche die Sichtfläche bilden. Furniere beinhalten dünne, folienartige Holzschnitte. Dabei kommt ein erheblicher Ausschuß vor, wenn die Furniere verarbeitet werden sollen, wie das Holz gewachsen ist.

Durch die Mischung von Holz und Kunststoff entsteht ein vorteilhaftes Holzsubstitut. Anstelle von Holz können auch andere zerkleinerte Pflanzen Anwendung finden. Wahlweise wird ein Extrudat aus Kunststoff und Holz und anderen Zuschlägen erzeugt, das geschäumt oder ungeschäumt ist. Bei geringem Holzanteil im Extrudat spricht man von einer Armierung oder von der Verwendung von Holz als Füller. In USA spricht man von einem Holzsubstitut, wenn die Holzanteil in der Mischung einen Gewichtsanteil von 50% erreicht. Zum Beispiel sind Bretter aus der Mischung von Holz und Kunststoff mit den angegebenen Mischungsanteilen in USA üblich. Der US-Markt akzeptiert dies. Ein Beispiel für die in USA üblichen Mischungen zeigt die WO 0211.03113A.
Der europäische Markt akzeptiert ein Holzsubstitut im Sichtbereich nur, wenn das Aussehen des Materials dem Holz wesentlich näher kommt. Dabei werden 70% und mehr Holzanteile erforderlich. Allerdings konnten dauerhafte und mangelfreie Außenanwendungen mit einem solchen Material bisher nicht erreicht werden.
Für die Verwendung von anderen Pflanzenbestandteilen, zum Beispiel von Stroh, anstelle von Holz gilt ähnliches wie bei Holz. Zum Teil haben die Pflanzenteile eine geringere Festigkeit als Holz. Soweit es auf die Festigkeit ankommt, ist dem durch Änderungen der Mischung Rechnung zu tragen. Als weitere Planzenteile können auch Körnerschrot und zerkleinertes Heu Anwendung finden.

Nach einem älteren Vorschlag soll der Kunststoff-Anteil am Extrudat so weit wie möglich reduziert werden. Dabei werden Holzanteile am Extrudat von 60 bis 95Gew%, bezogen auf die Mischung, angestrebt. Der optimale Kunststoff-Anteil soll in Abhängigkeit von den Mischungsanteilen, von der Verarbeitung und von den vorgesehenen Eigenschaftswerten der Mischung zugegeben werden.

Die Abmessungen der Pflanzenpartikel werden nach dem älteren Vorschlag bei Verwendung üblicher Extruder von der Durchgängigkeit der Partikel in dem Extruder bestimmt. Dabei wird die Durchgängigkeit von dem Spiel der bewegten Extruderteile im Extruder und von der Öffnungsweite des Düsenspaltes bestimmt. Die Durchgängigkeit kann anhand der bekannten Maschinendaten bestimmt werden. Danach können die für den jeweiligen Extruder zulässigen Abmessungen der Pflanzenpartikel festgelegt werden. Aus Sicherheitsgründen können die Abmessungen der Planzenpartikel kleiner gewählt als die oben beschriebene Durchgängigkeit.

Alternativ kann nach dem älteren Vorschlag auch die Durchgängigkeit der Extruder der gewünschten Partikelgröße angepaßt werden. Das geschieht im Wege des Extruderneubaus oder des Austausches von Bauteilen, z.B. des Austausches der Extruderschnecke, der Düse oder der Buchse im Extrudergehäuse. Zeitgemäße Extruder besitzen eine Buchse im Extrudergehäuse, in der die Schnecken umlaufen.

Als Kunststoffe kommen alle extrudierbaren Kunststoffe in Betracht, insbesondere Polyethylen (PE), Polystyrol (PS), Polyurethan (PU) und Polypropylen (PP). Besonders bevorzugt findet PE Anwendung.

Die Haftvermittler können eine mangelnde Haftung von Kunststoff mit Pflanzenpartikeln bzw. mit Holz kompensieren.
Haftvermittler bilden Molekularbrücken an den Grenzflächen zwischen den zu verbindenden Stoffen, hier dem Kunststoff.
Soweit noch andere Füllstoffe oder Armierungs/Verstärkungsmittel wie z.B. Glasfasern Einsatz finden, können die Haftvermittler auch die Aufgabe haben, die Haftung zu diesen anderen Stoffen zu erhöhen. Haftvermittler können sein, VC(Vinylchlorid)-Copolymerisate, polymerisierbare Polyester oder Vinyl-Acrylnitril-Methacrylsäure-Copolymerisate, Phenolharze, Kautschukderivate oder Acrylharze ohne oder mit PF(Phenol-Formaldehyd)-bzw. EP(Epoxid)-Harzen.
Als Haftvermittler sind allgemein auch EVA (Ethylen-Vinylacetat-Copolymerisate) bekannt; Ausreichend kann auch schon sein, die Pflanzenpartikel zu hydrophobieren, d.h. die Oberflächenspannung herabzusetzen.

Der Kunststoff wird herkömmlich als Granulat mit den Pflanzenpartikeln und Zuschlägen in den Extruder aufgegeben. Wahlweise beinhalten die Granulate bereits eine Mischung von Kunststoff und Zuschlägen.

Die Feuchte kann durch Trocknung auf jedes für die Extrusion gewünschte Maß reduziert werden. Gewünscht ist dabei nicht immer ein minimaler Feuchtegehalt, sondern wahlweise ein bestimmter Feuchtegehalt, mit dem Einfluß auf den Extrusionsvorgang und/oder auf die Beschaffenheit des Extrudats genommen wird.

Für die Extrusion wurden bisher Doppelschneckenextrudern als besonders günstig angesehen, weil diese Extruder haben:
eine sehr hohe Einzugswirkung
einen sehr guten Druckaufbau.

Vorteilhafterweise können Extruder aus verschiedenen Elementen bzw. Abschnitten unterschiedlicher Bauart zusammengesetzt werden. Deshalb ist es möglich, für die Plastifizierungszone ein dort günstiges Element in der Bauart eines Doppelschneckenextruders einzusetzen und dieses Element in anderen Extruderzonen mit anderen Bauarten zu kombinieren, die dort Vorteile haben. So kann in der Einfüllzone ein Einschneckenextruderabschnitt verwendet werden, mit dem sich ein Druckaufbau vorteilhaft darstellen läßt. Für die Mischung und Homogenisierung sind andere Abschnitte besser.

Unter Druck und Temperatur schmilzt der Kunststoff auf. Im weiteren Gang der Einsatzmischung durch den Extruder wird die Mischung homogenisiert. Für die Homogenisierungszone und Dispergierungszone ist es von Vorteil, dort Extruderelemente einzusetzen, die eine große Mischleistung besitzen. Das sind z.B. Elemente mit der Bauart eines Planetwalzenextruders. Dieses Element besitzt zugleich eine hohe Kühlwirkung, mit der sich die Verarbeitungstemperatur sehr genau kontrollieren läßt. Je nach Pflanzenart bzw. Holzart und je nach Kunststoff ergibt sich eine andere optimale Verarbeitungstemperatur für die Schmelze. Die Temperatur kann zum Beispiel bis 200 Grad Celsius bei einer maximalen Verweildauer (Wärmebelastungsdauer) von 15 min betragen. Bei kürzerer Dauer kann die maximale Temperatur höher als bei längerer Dauer sein.

Bei der weiteren Extrusion ist zwischen dem Extrudieren ungeschäumten Kunststoffes und dem Extrudieren geschäumten Kunststoffes zu unterscheiden.
Bei beiden Extrusionsvorgängen kann ein bestimmter Feuchtegehalt erwünscht sein.
Die Restfeuchte kann als Gleitmittel dienen. Die Restfeuchte kann auch in chemische Reaktion treten. Zum Beispiel kann die Feuchte in Reaktion mit dem Lignin der Pflanzenpartikel treten. Überraschender Weise kann damit eine verbesserte Haftung zwischen Holz und Kunststoff bewirkt werden. Der geeignete Gehalt an Feuchte/Lignin läßt sich durch Variation der Feuchte und Variation des Ligningehaltes austesten. Lignin steht auch in flüssiger Form handelsüblich zur Verfügung.

Wenn bei der Extrusion kein Wasser gewünscht ist, kann dem einerseits durch Trocknung der Pflanzenpartikel vor der Extrusion entgegengewirkt werden. Zusätzlich oder anstelle der Trocknung kann die Feuchte nach Verdampfung im Extruder im Wege der Entgasung entfernt werden. Die Entgasung kann unmittelbar nach der Verdampfung stattfinden. Das ist regelmäßig in der Plastifizierungszone der Fall. Dort findet die notwendige Erwärmung statt. Diese Erwärmung entsteht aus der Verformungsarbeit beim Plastifizieren und gegebenenfalls durch Zuführung von Wärme. Die Zuführung von Wärme kann z.B. über eine Temperierung im Extrudergehäuse erfolgen.
Die Entgasung findet, soweit sie gewünscht ist, spätestens unmittelbar vor der Extrusionsdüse statt.
Die Entgasung setzt voraus, daß der Schmelzdruck reduziert wird.
Bekannt ist auch die Entgasung unter Verwendung von zwei Extrudern in Tandemanordnung an der Übergabe zwischen den beiden Extrudern.
Die Entgasung kann auch in einem Extruder erfolgen. Die notwendige Druckreduzierung der Schmelze kann mit verschiedenen Maßnahmen erfolgen, z.B. durch Änderung der Ganghöhe der Schnecke im Extruder.
Zur Entgasung kann die Schmelze auch aus dem Extruder abgezogen und über eine Entgasungsvorrichtung geführt und wieder in den Extruder zurückgeführt werden.
Dabei kann die Drucksteuerung durch Zwischenschaltung einer Schmelzepumpe wesentlich erleichtert werden. Das gilt auch für den Druck unmittelbar vor der Extrusionsdüse (Werkzeug). Hier kann der Druck zusätzlich noch durch die Schmelzepumpe vergleichmäßigt werden und so die Qualität des Extrudats verbessert werden.

Je höher der Holzanteil im Gemisch ist, desto größer wird die Gefahr, daß das Material nicht mehr für eine Außenanwendung geeignet ist. Die bekannten Materialien zerfallen nach einiger Zeit aufgrund ständiger Frost/Tauwechsel. Ein weiterer Nachteil der bekannten Materialien ist ein überproportionales Quellen, das leicht zu großen Schäden führt oder mit überdimensionalen Dehnungsspalten berücksichtigt werden muß.
Außerdem erhöht sich der Verschleiß der Extrusionsanlage mit zunehmendem Holzanteil. Der Verschleiß reduziert die Wirtschaftlichkeit der Anlage.

Die Erfindung hat sich deshalb die Aufgabe gestellt, die Herstellung von Holzsubstitut aus einer Mischung von Holzpartikeln oder anderen Pflanzenpartikeln zu verbessern. Insbesondere sollen Materialien mit besserer Holzanmutung hergestellt werden, soll eine Verwendung der Materialien im Freien möglich sein und soll die Wirtschaftlichkeit der Anlage durch Verringerung von Verschleiß verbessert werden. Soweit im weiteren von Holz gesprochen wird, schließt das die oben angesprochenen alternativen Pflanzenpartikel ein. Die im Vergleich zum US-Standard gewünschte bessere Holzarimutung bedingt Holzanteile bzw. Pflanzenanteile von mindestens 60 Gew%, vorzugsweise 65Gew% und mehr.

Nach der Erfindung und gemäß Anspruch 1, wird eine wesentliche Verfahrensverbesserung durch eine Mischung von Kunststoff und Holzpartikeln und anderen Pflanzenpartikeln in einem Planetwalzenextruder oder Planetwalzenextruderabschnitt erreicht.
Der Anwendung steht zugleich die Erkenntnis entgegen, daß hohe Holzanteile bzw. hohe Pflanzenanteile zu einem starken Verschleiß in dem vorgesehenen Planetwalzenextruder oder Planetwalzenextruderabschnitt führt.

Vorzugsweise wird der Verschleiß dadurch reduziert, daß der Kunststoff zumindest getrennt vom Holz und wahlweise auch getrennt von anderen verschleißverursachenden Zuschlägen der Mischung plastifiziert und anschließend in den Strom der Holzpartikel gespritzt und daß die Mischung homogenisiert und gepresst wird.
Zu den Zuschlägen können unter anderem gehören: Farben, Koppler zur Erhöhung der Haftung zwischen Kunststoff und Holz, Gleitmittel zur Verringerung der Reibung im Extruder, Hydrophobierungsmittel, Stabilisatoren.

In der US6479002B1 ist unter anderem auch erwähnt, daß der Kunststoff separat von Holzpartikeln und anderen Pflanzenpartikeln aufgeschmolzen und anschließend den Holzpartikeln oder anderen Pflanzenpartikeln zugeführt wird. Dies ist aber nicht zu Lösung eines Verschleißproblems an Planetwalzenextrudern, sondern im Zusammenhang mit einer speziellen Trocknung des Holzes oder der anderen Pflanzenpartikel vorgesehen. Dabei findet eine Verdampfung des überschüssigen Wassergehaltes der Holzpartikel oder anderen Pflanzenpartikel durch Verdichtung statt. Der Wasserdampf soll anschließend abgesaugt werden. Die Absaugung setzt einen Druckabfall voraus.
Dabei ist vorgesehen, den Verdichtungsvorgang mit Entspannung so oft zu wiederholen, bis die gewünschte Trocknung erreicht ist.
Diese Art der Trocknung ist für die Erfindung ungeeignet.

Außerdem sind in der US6479002 zwei verschiedene Wege zur Vermischung von Holz und Kunststoff vorgesehen:
In einer Variante sollen Kunststoffpellets oder Kunststoffgranulat mit dem getrockneten Holz vermischt werden. Das entspricht dem an anderer Stelle erläuterten Stand der Technik.
In einer anderen Variante soll Schmelze mit dem getrockneten Holz vermischt werden. Die Zumischung des Holzes erfolgt im Bereich einer Knetzone.
In der Knetzone wird das Material mit Knetfingern bearbeitet, die mit Extruderschnecken nichts gemein haben und noch weniger mit Planetwalzenextrudern gemein haben.

Die FR-A-2564374 zeigt die Verwendung eines Hilfsextruders neben einem Hauptextruder. Der Hilfsextruder hat die Aufgabe Recyclat in dien Hauptextruder einzuspeisen. Dabei weiß der Fachmann, daß Recyclat immer nur in geringen Prozentsätzen, bezogen auf die Menge frischen Kunststoffes im Hauptextruder zulässig ist Mit dem Hilfsextruder läßt sich die Zugabe sehr gut dosieren. Eine separate Aufschmelzung des Kunststoffes für Holz-Kunststoffmischungen zur Lösung von Verschleißproblemen in Planetwalzenextrudern wird damit nicht gelehrt.
Auch die EP1262294A1 gibt keinen Lösungsansatz für die Verschleißprobleme. In der Druckschrift ist die Herstellung von Schaum aus Holz-Kunststoffmischungen beschrieben.

Deshalb hat es durch vorstehende Druckschrift auch nicht nahe gelegen, die dort erwähnte separate Aufschmelzung von Kunststoff zur Lösung des Verschleißproblems an Planetwalzenextrudern heranzuziehen.

Vorzugsweise wird zunächst der Kunststoff mit den Zuschlägen in eine Mischung gebracht und aufgeschmolzen und die Schmelzemischung homogenisiert. Dem folgt die Vermischung mit dem Holz.
Durch das Homogenisieren verteilt sich der Kunststoff gleichmäßig auf die Holzpartikel. Für obigen Vorgang ist günstig, wenn die Schmelze dünnflüssig ist. Jeder thermoplastische Kunststoff hat einen Schmelzpunkt und oberhalb des Schmelzepunktes einen Punkt, in dem der Kunststoff gasförmig ist und/oder in eine chemische Reaktion tritt. Der Punkt, an dem der Kunststoff in einen gasförmigen Zustand übergeht, ist vom Umgebungsdruck abhängig. So kann die Schmelztemperatur je nach Beschaffenheit des Kunststoffes zum Beispiel für Polyethylen (PE) zwischen 100 und 135 Grad Celsius liegen (PE-LD 105-118 Grad, PE-MD 120-125 Grad, PE-HD 126-130 Grad, PE-UHMW 10-135 Grad, PE-LLD 126 Grad). Unter entsprechendem Druck kann die Massetemperatur sehr viel höher liegen (PE-LD 160-260 Grad, PE-HD 260 -300 Grad, PE-HD-UHMW 240-300 Grad.
Durch Pressen der Holzpartikel werdem deren Hohlräume zumindest deutlich verringert. Vorzugweise werden die Hohlräume/Poren im Holz um mindestens 10%, vorzugsweise um mindestens 20% ihres Ausgangsvolumens verringert. Wahlweise werden die Holzpartikel auch noch weiter verdichtet, zum Beispiel auf mindestens 40% ihres Ausgangsvolumens verringert. Das geschieht durch Verdichten der Holzpartikel bzw. Pflanzenpartikel. Die Verdichtung ist mindestens an der Oberfläche vorgesehen. Durch die Verdichtung an der Oberfläche verringert sich der Verbrauch an Kunststoff, der notwendig ist, um eine ausreichende Verbindung zwischen den Partikeln herzustellen und um die Feuchteaufnahme und das Quellen der Partikel auf ein für die jeweilige Anwendung zulässiges Maß zu verringern.
Ähnliche Wirkung hat die Einhaltung bestimmter Korngrößen.
Vorzugsweise werden Späne mit einer Partikelgröße kleiner 1mm, noch weiter bevorzugt kleiner oder gleich 0,8mm verwendet. Die verwendeten Späne haben ein Kornspektrum. Vorzugsweise liegt die Hauptmasse der Späne bei einer Partikelgröße von 0,3 bis 0,4mm. Mit Hauptmasse sind mindestens 50%, vorzugsweise mindestens 60% der Späne gemeint.

Das Komprimieren von Holz für die Herstellung von Mischungen aus Holz und Kunststoff ist an sich bereits Gegenstand eines älteren Vorschlages. In dem älteren Vorschlag ist vorgesehen, die Holzpartikel vor dem Zusammenführen mit dem Kunststoff zu pelletierten. Die Verwendung von Pellets dient vorrangig der Vergrößerung des Holzanteiles in der Mischung, zum Beispiel auf einen Anteil von über 80Gew% in der Mischung. Dabei erleichtern die Pellets das Einziehen der Holzpartikel in den Extruder. Die Pellets laufen nämlich leicht in den Aufgabetrichter eines Extruders. Die Pellets lassen sich auch leicht dosieren. In der Praxis haben die Pellets sich jedoch nicht bewährt, weil die Gefahr besteht, daß die Pellets sich im Extruder nicht ausreichend aufschließen, aber später zerfallen, wenn sie nach der Profilgebung der Mischung durchfeuchtet werden. Die Gefahr ist um Vieles größer bei Verwendung des Materials im Außenbereich, wenn die durchfeuchteten Pellets in der Mischung immer wieder einen Frost/Tauwechsel durchlaufen.

Bei der Pelletierung findet auch eine Pressung des Holzes und eine Reduzierung des Hohlraumes in dem Holz statt, jedoch findet das vor der Berührung mit der Kunststoffschmelze statt.
Während bei dem erfindungsgemäßen Verfahren überraschend gute Widerstandswerte gegen Frost/Tauwechel zeigt und ein sehr viel geringeres Quellverhalten zeigt, tritt das Gegenteil bei Verwendung von Pellets ein, die vor der Berührung mit Schmelze hergestellt worden sind.

Nach der Erfindung erfolgt die Verarbeitung anders als bei dem älteren Vorschlag ohne die großen Pellets und deren notwendiger Zerkleinerung, sondern durch Einsatz von kleineren Partikeln ihm Rahmen obiger Grenzen, welche eine Zerkleinerung entbehrlich machen bzw. durch die Verdichtung im Extruder nach kleiner werden. Bei den Pellets besteht die Gefahr, daß die Pellets nicht wieder vollständig zerkleinert werden und die unzerkleinerten Reste in das Produkt gelangen, ohne daß Kunststoff zwischen die miteinander verpreßten Partikel gelangt. Dann führt eine Feuchteaufnahme des Pellets zu einem Quellen und zu einem Verlust der Partikelbindung in dem Pelletrest.

Die erfindungsgemäße Zusammenführung von Kunststoffschmelze und Holz erfolgt vorzugsweise unter Vorwärmung des Holzes, so daß die Fließfähigkeit der Schmelze nicht wesentlich durch einen Übergang von Wärme auf das Holz reduziert wird.

Die Zusammenführung von Holz und Kunststoffschmelze erfolgt vorzugsweise in einem Planetwalzenextruder bzw. in einem Planetwalzen-Abschnitt eines Extruders. Die Planetwalzen bestehen aus einer mittigen Zentralspindel, umlaufenden Planetenspindeln und einem innen verzahnten Gehäuse. Die Planetenspindeln kämmen beim Umlaufen gleichzeitig mit der Zentralspindel und dem innen verzahnten Gehäuse. Dabei werden die zwischen die Zähne der Planetenspindeln gelangenden Holzpartikel mit der Kunststoffschmelze besonders innig vermischt und zugleich gepresst.

Im Prinzip kann die Vorwärmung der Holzpartikel erst im Extruder erfolgen. Günstig ist eine Vorwärmung der Holzpartikel vor deren Aufgabe in den Extruder, weil herkömmliche Einrichtungen für die Vorwärmung nur einen Bruchteil der Kosten eines Extruders verursachen.

Die Austrittstemperatur der Mischung aus dem Extruder wird vorzugsweise so gewählt, daß der austretende Profilstrang eine ausreichende Steifigkeit besitzt, um zum Beispiel auf einem Rollengang mit dicht aneinander angeordneten Rollen auskühlen zu können, ohne daß es zu nachteiligen Verformungen kommt. Aber auch höhere Austrittstemperaturen können beherrscht werden, indem unmittelbar hinter der Extrusionsdüse eine Kalibrierung vorgesehen ist. Die Kalibrierung entspricht in den Abmessungen ihrer Durchrittsöfnung dem gewünschten Querschnitt des Extrusionsstranges. Die Berührungsflächen der Kalibrierung mit dem Extrusionsstrang sind jedoch gekühlt, so daß sich der Extrusionsstrang am äußeren Rand verfestigt und dadurch rollgangsfest wird.
Die Kalibrierung ist der Extrusionsdüse sehr ähnlich. Auch die Extrusionsdüse besitzt eine Öffnung mit einem Querschnitt, der dem Querschnitt des gewünschten Extrusionsstranges entspricht. Auch die Düse besitzt vorzugsweise eine Kühlung. Soweit diese Kühlung ausreicht, um den austretenden Extrusionsstrang rollgangsfest zu machen, ist eine Kalibrierung in obigem Sinne entbehrlich. Dagegen kann eine Verwendung der Kalibrierung wirtschaftlicher als eine Extrusionsdüse in Sonderform mit besonders langer Kühlstrecke sein

Vorteilhafterweise haben insbesondere die extrudierten Profile, bei denen die Holzpartikel nach dem Eintritt in den Planetwalzenabschnitt des Extruders sofort mit Kunststoffschmelze vermischt und anschließend zwischen den Teilen des Planetwalzenextruderabschnittes verdichtet worden sind, eine besonders hohe Festigkeit und einen besonders großen Widerstand gegen Feuchteaufnahme und eine besonders hohe Frost/Tauwechselbeständigkeit.

Die Erfindung erklärt sich das damit, daß die Schmelze bei dem erfindungsgemäßen Verfahren zumindest teilweise in die Hohlräume/Poren des Holzes eingedrungen ist, bevor es zu einer Verdichtung kommt. In dem Fall führt die Verdichtung bei dem erfindungsgemäßen Verfahren vorteilhafterweise zu einer weiteren Ausfüllung und zu einem Verschließen der Hohlräume/Poren. Bei dem bekannten Verfahren führt die Verdichtung des Holzes lediglich zu einer Verengung der Hohlräume/Poren, so daß die zähflüssige Schmelze zwar nicht mehr oder kaum noch in die Hohlräume dringen kann, Wasser und vor allem Dampf aber sehr wohl. Die eindringende Feuchtigkeit ist die Ursache für Quellen. Bei einem Frost/Tauwechsel kommt es zu extremen Belastungen der Mischung. Es besteht die Gefahr, daß die Mischung durch die Eisbildung bzw. beim Schmelzen des Eises aufgebrochen wird.

Von dem erfindungsgemäßen Verfahren sind einzelne Merkmale an sich bekannt. Jedoch nicht in der erfindungsgemäßen Kombination.
In dem Sinne ist aus der EP 1297933A1 die Herstellung von Mischungen bekannt, bei der zunächst Kunststoff aufgeschmolzen und anschließend mit Holzpartikeln gemischt und geknetet wird. Anschließend soll die Mischung einem Extruder zugeführt und zu einer Platte verpresst werden. Es handelt sich um eine typische Spanplattenherstellung. Bei der Spanplattenherstellung gilt es, die Holzpartikel mit dem Kleber zu benetzen und anschließend zu verpressen. Eine Extrusion der Späne kommt bei der Spanplattenherstellung nicht vor. Typisch ist, die Späne in einem Kneter mit dem Kleber zu verrühren.
Bei dem erfindungsgemäßen Verfahren ist dagegen eine Extrusion vorgesehen. Dabei ist kein zusätzlicher Kneter erforderlich. Holz und Kunststoff werden unmittelbar in den Extruder gerührt. Aus dem Extruder tritt die Holz/Kunststoffmischung in einem "endlosen" Strang aus. Im übrigen ist bei dem bekannten Verfahrent nicht nur mehr Aufwand zu berücksichtigen, das Kneten der flüssigen Schmelze führt auch zu einem höheren Kunststoffanteil.

Die EP 1262293A1 beinhaltet auch einen Vorschlag zur Mischung von Holzspänen und Kunststoff. Die Späne sollen eine Breite von 0,5 bis 20 mm, eine Dicken von 0,5 bis 2,5 mm und eine Länge von I bis 50 mm aufweisen. Zur Benetzung der Holzspäne wird ein Strahl flüssigen Kunststoffes erzeugt und werden die Holzspäne in den Strahl eingestreut und entsteht auf einem darunter angeordneten Band eine Materiallage, die anschließend verpreßt wird. Ein Extruder wird mit den Holzspänen nicht. Lediglich zur Verflüssigung des Kunststoffes ist ein Extruder vorgesehen. Dieser bekannte Vorschlag geht nicht über den zuvor erläuterten bekannten Vorschlag hinaus. Das gilt auch soweit in dem Vorschlag die Benetzung von Fasern mit Kunststoff angesprochen worden ist.

Die US-PS 5653534 zeigt ein Verfahren zur Verstärkung von Kunststoff mit Fasern. Der Kunststoff wird in eine schmelzflüssige Form gebracht. Danach werden die Fasern eindosiert. Das entstehende Produkt besitzt im wesentlichen das gleiche Aussehen wie Kunststoff ohne Verstärkungseinlage. Bei dem erfindungsgemäßen Verfahren soll jedoch ein Holzsubstitut mit der Anmutung einer Holzoberfläche entstehen.
Außerdem stellt die Verarbeitung von Holz/Kunststoffmischung mit einem Holzanteil von 60% und mehr gegenüber der Verarbeitung von Faser/Kunststoffmischung mit einem Faseranteil von 30% unvergleichlich höhere Anforderungen.

Die DE102004034039 zeigt einen Extruder zur Herstellung eines Gemisches aus Kunststoff und cellulosehaltigem Materail (zum Beispiel Holz). Der Holzanteil soll dabei 70 bis 95 Gew% in dem Gemisch betragen können.
Der Extruder setzt sich aus verschiedenen Abschnitten zusammen. Durch alle Abschnitte erstreckt sich eine gemeinsame Welle. In zwei Abschnitten 7 und 9 ist die Extruderwelle als Einschnecke ausgebildet. Diese beiden Abschnitte 7 und 9 schließen den Abschnitt 8 zwischen sich ein. Dieser Abschnitt soll in "Form einer Stirnwalze eine Zahnradwalze" sein. Über diese Zahnradwalze sollen 6 nicht gezeigte Planetenzahnradwalzen angetrieben werden. Den Abschnitten 7 bis 9 ist ein Füllteil vorgeordnet. Die Extruderwelle erstreckt sich auch durch das Füllteil. Im Füllteil ist die Extruderwelle als Einschnecke ausgebildet. Das Einsatzmaterial für den Extruder wird dem Extruder über das Füllteil zugeführt. Dabei wird zunächst der Kunststoff zugeführt und anschließend das cellulosehaltige Material wie Holz. Nach der DE102004034039 soll die Zerkleinerung des Rohmaterials (also des cellulosehaltigen Materials wie Holz) durch die Hauptschnecke und die umlaufenden Planetenzahnradwalzen ein wesentliches Merkmal der Erfindung sein. Eine Extruderwelle in "Form einer Stirnwalze und Zahnradwalze" ist technisch unverständlich. Hinzu kommt, daß in der DE102004034039 von einem Zerreiben des Rohmaterials zwischen der Stirnwalze und umlaufenden Zahnradwalzen zu lesen ist. Das schließt aus, daß zwischen der Stirnwalze und den umlaufenden Zahnradwalzen ein Zahneingriff besteht.
Außerdem ist in der DE102004034039 eine Zerkleinerung des Rohmaterials zwischen der Hauptschnecke und den umlaufenden Planetenzahnradwalzen gefordert.
Das kann nicht als Hinweis auf einen üblichen Planetwalzenextruder verstanden werden.

Bei der erfindungsgemäßen Mischung des Holzes mit der flüssigen Schmelze vor dem Verpressen/Verdichten ist die Temperatur der Mischungsanteile von erheblicher Bedeutung. Günstig ist eine hohe Temperatur der Schmelze. Je höher die Schmelzetemperatur ist, desto höher ist die Fließfähigketi der Schmelze und desto bessser kann die Schmelze vor dem Verdichten des Holzes in dessen Hohlräume/Poren dringen. Die maximale Schmelzetemperatur ist materialabhängig. Vorzugsweise wird bei der Schmelzetemperatur ein Sicherheitsabstand von der Temperatur eingehalten, bei der die Schmelze in einen gasförmigen Zustand übergeht oder eine chemische Reaktion entsteht. Der Sicherheitsabstand beträgt wahlweise mindestens 5%, noch weiter bevorzugt mindestens 10% und höchst bevorzugt mindestens 15% von der Temperatur, bei der ein Übergang in den gasförmigen Zustand oder eine chemische Reaktion eintritt.

Darüber hinaus ist die Schmelzetemperatur durch die Beschaffenheit des Holzes beschränkt. Je nach Beschaffenheit neigt das Holz bei höheren Temperaturen zu einer unerwünschten Verfärbung.

Je nach Material und Druck ergeben sich unterschiedliche Verarbeitungstemperaturen für die Schmelze. Ob der Verarbeitungsbereich ganz oder teilweise ausgeschöpft werden kann, hängt von dem eingesetzten Holz und von der Temperatur des Holzes ab. Bei den höheren Temperaturen entsteht hochflüssiger Kunststoff. Das heißt, die erfindungsgemäße Plastifizierung beinhaltet eine starke Verflüssigung.

Vorzugweise wird Kunststoff eingesetzt, der höchstens einmal recycelt ist. Je häufiger das Material recycelt ist, desto schlechter wird die Fließfähigkeit bei einigen Kunststoffen. Oder es wird Kunststoff eingesetzt, der aus einer Mischung von frischem Material mit recyceltem Material besteht und mindestens die gleiche Fließfähigkeit wie ein Material besteht, das insgesamt nicht mehr als einmal recycelt worden ist.
Noch weiter bevorzugt wird insgesamt frischer Kunststoff, nicht recyceltes Material eingesetzt.
Wahlweise wird der Kunststoff zusammen mit Zuschlägen plastifiziert oder werden die Zuschläge nach der Plastifizierung des Kunststoffes mit diesem vermischt, bevor die Mischung mit den Holzpartikeln stattfindet. Zu diesen Zuschlägen gehören vorzugsweise Farbstoffe und Haftvermittler sowie Hydrophobierungsmittel.

Die Holzpartikel werden vorzugsweise in der Form von Spänen, zum Beispiel in der Form von Sägespänen eingesetzt. Sägespäne fallen in großen Mengen bei der Verarbeitung von Holz an. Zugleich liegen die Abmessungen von Sägespänen in bestimmten Grenzen. Üblicherweise werden Sägespäne mit Druckluft gefördert. Mit der Druckluft können die Holzpartikel in weiten Grenzen an beliebige Stellen, z.B. in Aufgabetrichter, transportiert werden. Druckluft entsteht üblicherweise unter Verwendung von Gebläsen, die auf der einen Seite Luft ansaugen und an der anderen Seite die Luft in eine Transportleitung drücken. Am Ziel des Holzpartikeltransportes muß die Druckluft wieder von den Holzpartikeln getrennt werden. Das geschieht durch geeignete Filter. In der Praxis können die Filter jedoch nicht jeden Staubpartikel aus der Druckluft abscheiden. Feinstaub gelangt in mehr oder weniger großem Umfang in die Umgebung.

In weiterer Ausbildung der Erfindung soll der Feinstaubaustritt reduziert werden. Deshalb wird vorzugsweise zum Transport der Holzpartikel Saugluft eingesetzt. Am Ziel des Sauglufttransportes werden die Holzpartikel wie beim Drucklufttansport mit Filtern von der Saugluft getrennt.

Wahlweise wird das Holz in vorgewärmter Form eingesetzt. Das vorgewärmte Holz kann das Eindringen der Schmelze in die Hohlräume/Poren begünstigen, weil die Schmelze bei der Berührung mit dem Holz nur in geringerem Umfang Wärme abgibt als bei Raumtemperatur des Holzes. Ferner kann die Vorwärmung des Holzes eine Trocknung bewirken.

Die Plastifizierung des Kunststoffes kann in verschiedenen Einrichtungen erfolgen. Denkbar ist eine batchweise Verflüssigung, Vorzugsweise ist zur Verflüssigung des Kunststoffes ein beheizter Druckbehälter vorgesehen. Der batchweise Betrieb erlaubt bei der Verwendung eines einzigen Druckbehälters mit einer einzigen Kammer nur einen intermittierenden Verflüssigungsvorgang. Mit zwei Behältern läßt sich jedoch bereits ein kontinuierlicher Verflüssigungsvorgang darstellen. Das gleiche gilt für einen einzigen Behälter mit zwei Schmelzekammern, die wechselweise befüllt und entleert werden können. Die Entleerung der Behälter erfolgt vorzugsweise durch eine Pumpe. Die Pumpe sorgt nicht nur für eine schnelle Entleerung. Die Pumpe kann auch einen hohen Druck in der Schmelze aufbauen.

Vorzugsweise geschieht das Plastifizieren der Schmelze in einem Extruder. Im Extruder läßt sich die Schmelzetemperatur leicht steuern/regeln.

Sofern eine Vorwärmung des Holzes gewünscht wird, wird das Holz parallel an anderer Stelle erwärmt. Nach der Erwärmung werden die Holzpartikel mit dem Kunststoff in Mischung gebracht, findet die oben beschriebene Homogenisierung und Verdichtung statt.

Die Erwärmung der Holzpartikel kann einstufig oder mehrstufig erfolgen. Die Erwärmung Die Erwärmung erfolgt vor der Berührung mit dem Kunststoff. Je nach Temperatur der zugeführten Schmelze und der weiteren Bearbeitung der Mischung und der damit verbundenen Temperaturführung kann das Holz durch die zugeführte Schmelze und die weitere Bearbeitung eine weitere Erwärmung oder eine Abkühlung erfahren.
Die Vorwärmung des Holzes beträgt vorzugsweise mindestens 50 Grad Celsius, noch weiter bevorzugt mindestens 100 Grad Celsius und höchst bevorzugt mindestens 150 Grad Celsisus. Wahlweise wird die mehrstufige Vorwärmung des Holzes mit unterschiedlichen Heizeinrichtungen bewirkt. Jede der Heizanlagen kann kontinuierlich oder diskontinuierlich arbeiten. Ein kontinuierlich arbeitende Heizanlagen ist zum Beispiel ein Heizband und/oder ein Tunnelofen.
Das Heizband ist ein beheizter Bandförderer, an dem die Holzpartikel sich erwärmen. Das Heizband kann die Holzpartikel auch unter geeigneten Wärmestrahlern durchgeführt werden. Günstig ist dabei, das Heizband einzuhausen, um einen Temperaturverlust zu vermeiden. Ein Tunnelofen unterscheidet sich von dem Heizband dadurch, daß nicht das Transportband, sondern die Einhausung mit einer Heizeinrichtung versehen ist und/oder daß ein Heizgas durch die Einhausung geleitet wird. Die Beheizungstemperatur wird so gewählt, daß jede Gefahr einer EntzündungBrändgefahr für das Holz vermieden wird.

Eine diskontinuierliche Erwärmung kann in einem Behälter erfolgen, bis die Holzpartikel die gewünschte Temperatur erreicht haben. Wahlweise wird der Behälter mit einem gasförmigen Heizmedium durchströmt. Günstig sind inerte Heizgase. Inerte Heizgase können mit weit höherer Temperatur in die Behälter geführt werden als zum Beispiel Luft, ohne daß eine Bratidgefahr besteht.
Nach der gewünschten Erwärmung der Holzpartikel kann der Behälter geöffnet und können die Holzpartikel zur Mischung mit dem Kunststoff aus dem Behälter abgeführt werden.

Für die Mischung und Homogenisierung von Holz und Schmelze können verschiedene Mischer Anwendung finden. Dazu gehören auch Kneter. Vorzugsweise sollen die Mischer unter Druck arbeiten, der erforderlich ist, um den Schmelzezustand bei der Eingangstemperatur in den Mischer zu wahren bzw. um eine Betriebstemperatur im Mischer/Kneter zu wahren, der oberhalb der Schmelztemperatur unter Normaldruck liegt.

Wenn die Vorwärmung ganz oder teilweise in einem Extruder bzw. einem Extruderabschnitt (Modul) erfolgt, so findet die Mischung von Kunststoff und Holz vorzugsweise in einem nachgeschalteten weiteren Extruder oder nachgeschalteten Extruderabschnitt statt. Jeder Extruder/Extruderabschnitt ist mit einer Materialaufgabeöffnung und mit einem Austritt für das aufbereitete Material versehen. Die Materialaufgabeöffnung befindet sich an einem Ende des Extruders. Von dort wird das Material unter gewünschter Behandlung zum Materialaustritt am anderen Extruderende gefördert.

Vorzugsweise werden die Holzpartikel in die Aufgabeöffnung des Extruders aufgegeben, in dem die Mischung mit dem Kunststoff vorgesehen ist. Der Kunststoff wird vorzugsweise in einem separaten Extruder plastifiziert und als Schmelze in den zur Mischung bestimmten Extruder gespritzt, sobald ein ausreichender Druckaufbau im aufgegebenen Holz stattgefunden hat. Bei gleichzeitiger Verwendung des Extruders zur Erwärmung des Holzes wird die Einspritzstelle so gewählt, daß die Heizstrecke ausreichend lang ist, um die gewünschte Temperatur zu erreichen.

Für die Extruder sind verschiedene Bauarten bekannt.
Es gibt Einschneckenextruder, Doppelschneckenextruder und Planetwalzenextruder.
Der Einschneckenextruder hat nur eine von einem Gehäuse umgebene Schnecke.
Der Doppelschneckenextruder besitzt zwei parallel nebeneinander angeordnete Schnecken, die miteinander kämmen. Die Schnecken können sich gleichsinnig drehen oder gegenläufig sein.
Sowohl der Einschneckenextruder als auch der Doppelschneckenextruder besitzt üblicherweise mehrteilige Schnecken. Dabei sind in axialer Richtungen eine Vielzahl von Hülsen hintereinander angeordnet, die außen die Verzahnung tragen und innen mit einer Durchgangsbohrung versehen sind, so daß sie mit einem Zuganker gegeneinander verspannt werden können. Diese Bauart erlaubt es, Doppelschneckenextruder über eine gewünschte Länge als Kneter auszubilden.
Der Planetwalzenextruder besitzt eine mittig angeordnete Zentralspindel, die angetrieben wird. Um die Zentralspindel herum sind Planetenspindeln angeordnet. Die Planetenspindeln kämmen mit der Zentralspindel.
Die Planetenspindeln sind mit einem innen verzahnten Gehäuse umgeben.
Die Planetenspindeln kämmen mit der Innenverzahnung der Gehäuse.
Jede Zentralspindeldrehung bewirkt eine Drehung der Planetenspindel. Dabei laufen die Planetenspindeln wie Planeten um die Zentralspindeln um.

Die verschiedenen Bauarten kommen auch in Kombination vor. Z.B. kann der Primärextruder einer Tandemanlage durch einen Einschneckenextruder oder Doppelschneckenextruder gebildet werden, während der Sekundärextruder ein Planetwalzenextruder ist. Der Primärextruder und der Sekundärextruder können mit unterschiedlicher Drehzahl betrieben werden. Das hat erhebliche Vorteile.

Die Kombination unterschiedlicher Extrudersysteme kann auch in einem einzigen Extruder erfolgen. Dabei bilden die miteinander kombinierten Extrudersysteme in dem einen Extruder Extruderabschnitte. Diese Abschnitte können mit den Verfahrensabschnitten des Extruders übereinstimmen, müssen es aber nicht.

Die Verfahrensabschnitte sind bei separater Aufarbeitung von Kunststoffen in einem separaten Extruder z.B. Einziehen des Kunststoffes, Aufschmelzen,
Homogenisieren/Dispergieren der separaten Schmelze.

Die Verfahrensabschnitte sind bei der Bearbeitung des Holzes/Holzpartikel in einem Extruder z.B. das Einziehen, Einspritzen der Schmelze, Mischen mit Schmelze, Homogenisieren der Mischung, Entgasen und Kühlen der Mischung auf Extrusionstemperatur.
Die vorstehenden Bearbeitungsschritte des Holzes/Holzpartikel können auch in zwei oder mehr hintereinander angeordneten Extrudern erfolgen. Bei zwei hinter einander angeordneten/geschalteten Extrudern wird von einer Tandemanlage mit einem Primärextruder und einem Sekundärextruder gesprochen. Bei mehr hintereinander angeordneten Extrudern wird von einer Kaskadenanlage gesprochen.
Die Tandemanlage und die Kaskadenanlagen eignen sich hervorragend zum Entgasen der Mischung. Dabei kann die Mischung aus dem Austragende des Primärextruders in die darunter angeordnete Einzugöffnung des Sekundärextruders fallen.
Zwischen dem Primärextruder und dem Sekundärextruder kann auch ein Förderer, zum Beispiel ein Bandförderer vorgesehen sein. Bei Verwendung des Förderers kann die Mischung auf den Förderer fallen und mit dem Förderer horizontal oder geneigt nach unten oder auf einer Steigung nach oben gefördert werden.
Auf dem Weg von dem Primärextruder in den Sekundärextruder kann die Entgasung stattfinden. Die Entgasung kann unter Umgebungsdruck stattfinden. Wenn die Entgasung verstärkt werden soll, dann kann das durch Anwendung eines Unterdruckes erfolgen. Dazu wird der Förderweg vom Primärextruder zum Sekundärextruder eingehaust.

Sowohl bei der Tandemanlage als auch bei der Kaskadenanlage wird die Mischung in einer Hitze in ein Extrusionsprodukt, insbesondere ein Extrusionsprofil, überführt. Die eine Hitze schließt eine weitgehende Abkühlung, insbesondere eine Abkühlung auf Umgebungstemperatur aus. Nach der Erfindung entsteht das Extrusionsprodukt, bevor Mischungsbestandteile wie Hydrophobierungsmittel in der Mischung ausreagieren können.
Außerdem erfährt die Mischung vor dem Eintritt in den letzten Extruder der Verarbeitungsstrecke(zum Beispiel Sekundärextruder der Tandemanlage) keine Erhärtung des Kunststoffes. Anderenfalls würden die erhärteten Mischungspartikel im Sekundärextruder wieder aufgebrochen werden, ohne daß gesichert wäre, daß das Holz der Partikel an den Bruchstellen wieder ausreichend gegen Feuchtigkeitsaufnahme gesichert wird.

Soweit bei der Herstellung Extruder verwendet werden, die aus Gehäuseabschnitten/Modulen bestehen, werden die Gehäuse in bekannter Weise mit Flanschen aneinander befestigt, vorzugsweise miteinander verschraubt.
Zugleich wird - soweit üblicherweise - eine gemeinsame Spindel verwendet. Z.B. setzt sich die Schnecke aus dem als Einschneckenextruder/Abschnitten ausgebildeten Bereich "Aufarbeitung des Kunststoffes" in den als Planetwalzenextruder/Abschnitt ausgebildeten Bereich "Kühlung der Schmelze auf Extrusionstemperatur" fort. Im
Planetwalzenextruder/Abschnitt bildet die gemeinsame Schnecke die Zentralspindel.

Die Verwendung einer gemeinsamen Schnecke für unterschiedliche Extruderabschnitte ist für zeitgemäße Extruder relativ einfach, weil diese Schnecken aus Hülsen zusammengesetzt werden, die von einer gemeinsamen Stange durchdrungen werden und miteinander verspannt werden. Diese Bauweise hat auch andere Vorteile.
Die Extruderabschnitte bilden sich häufig auch in dem Extrudergehäuse ab.
Dabei werden die Gehäuseabschnitte an den Enden mit Flanschen aneinander verspannt.

Im folgenden wird nur von Extrudern gesprochen, das schließt sowohl die Kombination mit gleichen oder anderen Extrudern als auch die abschnittsweise Kombination unterschiedlicher Extrudersysteme in einem Extruder ein. Desgleichen ist eingeschlossen die Kombination von Extrüderabschnitten gleichen Systems.

Alle zeitgemäßen Extruder sind mit einer Temperierung versehen.
Dazu sind die Extruder innen mit einer Buchse versehen. Die Buchse besitzt außen Kanäle, die wie Rillen oder wie Gewindegänge oder wie Schneckengänge in die Außenfläche der Buchse eingearbeitet sind. Die außen angeordneten Kanäle lassen sich verhältnismäßig leicht spanabhebend durch Drehen und Fräsen einarbeiten.

Die so bearbeiteten Kanäle werden in die innen glatten Gehäusebohrungen eingesetzt. Durch die Kanäle werden wahlweise in Schmelzströmungsrichtung oder entgegen der Schmelzeströmungsrichtung Kühlmittel oder Heizmittel gedrückt. Wahlweise lassen sich dabei beliebige Heizstrecken und Kühlstrecken erzeugen. Durch die Wendelung der Kanäle wird das Heizmittel oder Kühlmittel besonders lang und kontrolliert an der Gehäusewand bzw. an der Außenwand der Buchse entlang geführt. Das sichert eine extreme Kühlung oder Beheizung.
Ob es sich um eine Heizstrecke oder eine Kühlstrecke handelt, ergibt sich aus dem jeweiligen Verfahren. Dabei muß dem durchströmenden Medium entweder Wärme zugeführt oder Wärme entzogen werden.

Theoretisch könnten die Kanäle auch an der Gehäuseinnenfläche angeordnet sein und können die Buchsen an der Außenseite glatt verlaufen.
Die Einarbeitung der Kanäle an der Gehäuseinnenseite ist um einiges aufwendiger als die vorstehend beschriebene Einarbeitung in die Außenfläche der Buchse.

Im übrigen ist es von Vorteil, die Buchsen durch Schrumpf im Extrudergehäuse zu montieren. Das geschieht durch Erwärmung des Extrudergehäuses. Durch die Erwärmung erfährt das Extrudergehäuse eine Ausdehnung. In dem Zustand wird die kalte Buchse in die Lagerbohrung des Extrudergehäuses geschoben. Bei anschließender Abkühlung zieht sich das Extrudergehäuse zusammen und umschließt die Buchse fest und schließend, wenn die Buchse ein entsprechendes Außenmaß und die Gehäusebohrung ein entsprechendes Innenmaß hat. Eine solche Situation entsteht bei Anwendung einer sogenannten Preßpassung. In der Preßpessung hat die Buchse außen mindestens den genau gleichen Durchmesser oder einen geringfügig größeren Durchmesser wie das Extrudergehäuse innen.
Die bekannten Preßpassungen sind so ausgelegt, daß nach dem Schrumpfen durch entsprechende Erwärmung des Gehäuses wieder eine Trennung der Buchse von dem Extrudergehäuse möglich ist, ohne daß es zu einer Beschädigung der Teile kommt. Die Trennung ist wichtig, um gegebenenfalls die Verzahnung in der Buchse nachzuarbeiten oder die alte Buchse gegen eine neue auszuwechseln.

Vorzugsweise ist für die erfindungsgemäße Aufbereitung einer Kunststoff/Holz-Mischung ein Extruder vorgesehen, der aus verschiedenen Abschnitten unterschiedlicher Bauart besteht, nämlich vorzugsweise einem Einschneckenmodul/Abschnitt und einem oder mehreren Planetwalzenmodulen.
Dabei ist es von Vorteil, wenn der Einschneckenmodul so lang gestaltet und beheizt ist, daß das eingefüllte Holz beim Verlassen des Einschneckenmoduls die gewünschte Temperatur erreicht hat. Vorteilhafterweise bewirkt der Einschneckenmodul zugleich einen Druckaufbau im Holz, der ein Austreten der eingespritzten Kunststoffschmelze in Richtung der Aufgabeöffnung für das Holz verhindert wird.

Von Vorteil ist auch, wenn der plastifizierte Kunststoff zwischen dem Einschneckenmodul und den für die Mischung von Kunststoff und Holz vorgesehenen weiteren Extrudermodulen über einen Anlaufring oder über einen Zwischenring zugegeben wird.

Zu jedem Modul bzw. Abschnitt gehört ein umgebendes, in der Regel rohrförmiges Gehäuse. Das gilt für Module bzw. Abschnitte jeder Bauart. Die Gehäuse sind an jedem Ende mit einem Kragen(Flansch) versehen. An dem Kragen findet die Befestigung mit den Gehäusen benachbarter Module bzw. Abschnitte und gegebenenfalls mit dem Gehäuse des üblicherweise an einem Extruder vorgesehenen Getriebes statt. Das Getriebe gehört zum Antrieb des Extruders.

Der zum Eintragen der flüssigen Kunststoffschmelze vorgesehene Zwischenring kann unterschiedliche Formen aufweisen.
Es kann sich um ein Rohrstück handeln, das bis auf eine die geringe axiale Länge mit dem Gehäuse des Einschneckenmoduls bzw. Abschnitts vergleichbar ist. Dann besitzt es gleichfalls Kragen an den Enden, mit denen die Befestigung des Zwischenringes an den Gehäusen der benachbarten Extrudermodulen bzw. Abschnitten erfolgt.
Der Zwischenring wird von der Extruderschnecke/Spindel durchdrungen. Die Extruderschnecke/Spindel ist im Bereich des Einschneckenmoduls bzw. des Einschneckenabschnitts eine Einschnecke, im Bereich der Planetwalzenmodule eine Zentralspindel.

Die Extruderschnecke/Spindel ist üblicherweise mehrteilig ausgebildet. Alle Teile besitzen eine Hülsenform mit einer Verzahnung an der Außenseite. Das mittige Loch wird mit einem Anker durchdrungen, der die Aufgabe hat, alle Hülsen miteinander zu verspannen.

Im Einschneckenmodul setzt sich die Extruderschnecke/Spindel zumeist aus einer Vielzahl von Teilen/Hülsen zusammen, die an der Außenseite eine unterschiedliche Verzahnung tragen, um durch Gestaltung der Schneckengänge auf die Verdichtung bzw. auf die Behandlung des Einsatzgutes im Einschneckenmodul Einfluß zu nehmen.
Im Planetwalzenmodul ist üblicherweise eine einteilige Hülse vorgesehen, welche die Zentralspindeln bildet und mit dem gleichen Anker gehalten wird, der die Hülsen des Einschneckenmoduls hält.
Der Anker erstreckt sich auch durch den oben beschriebenen Zwischenring für die Bedüsung. Im Zwischenring ist auf dem Anker gleichfalls eine Hülse vorgesehen. Die Hülse kann außen die gleiche oder eine andere Verzahnung wie die Einschnecke an deren Ende tragen. Wahlweise ist der Zwischenring in gleicher Weise wie die Extrudermodule/Abschnitte mit einer Temperierung versehen, die nach Bedarf eine Kühlung oder eine Beheizung erlaubt.

Der Zwischenring kann auch ohne Kragen montiert werden. Dann wird der Zwischenring zwischen die Kragen der benachbarten Gehäuse, also zwischen das Gehäuse des Einschneckenmoduls und das Gehäuse des Planetwalzenmoduls gesetzt. Anschließend werden die beiden zugehörigen Kragen durch Spannschrauben oder andere Spannmittel gegeneinander verspannt.

Günstig ist, wenn ein Zwischenring in eine Zentrieröffnung der benachbarten Gehäuse bzw. Kragen greift oder umgekehrt die benachbarten Gehäuse in eine Zentrieröffnung des Zwischenringes greifen. Die Zentrieröffnung kann durch eine Ausdrehung an der Stirnfläche des Zwischenringes bzw. des benachbarten Gehäuses gebildet werden. Dabei kann eine kleine Ausdrehung ausreichen. Mit der Ausdrehung korrespondiert ein entsprechender Vorsprung an der jeweils gegenüberliegenden Strimfläche.

Für die Zuführung der flüssigen Schmelze sind in dem Zwischenring vorzugsweise mehrere gleichmäßig am Umfang verteilte Eintrittsbohrungen vorgesehen. Zu den verschiedenen Eintrittsbohrungen können einzelne Leitungen führen. Es kann aber auch eine Verbindung der Eintrittsbohrungen durch eine Ringnut im Zwischenring gegeben sein, die mittels eines Deckels geschlossen ist und über eine gemeinsame Zuführungsleitung mit flüssiger Schmelze gespeist wird.

Die Zuführungsleitungen verbinden den für die Verflüssigung von Kunststoff vorgesehenen Extruder mit dem Zwischenring. Es ist von Vorteil, die Zuführungsleitungen zu isolieren und zu beheizen, damit kein unerwünschter Temperaturabfall in der Schmelze eintritt oder die Schmelze sogar einfriert.
Wahlweise sind in den verschiedenen Zuführungsleitungen zum Zwischenring Ventile oder Blenden zur Einstellung des Schmelzestromes vorgesehen. Die Ventile erlauben wahlweise
ein Nachstellen und Einflussnahme auf den Schmelzestrom während des Betriebes. Das kann zur Vergleichmäßigung oder zur Erzeugung von Unterschieden genutzt werden. Zusätzlich oder anstelle der Ventile kann auch eine Veränderung des Schmelzestromes durch Einsätze erreicht werden, die in den Zuführungsleitungen positioniert werden. Die Einsätze können auch in dem Zwischenring vorgesehen sein.
Im übrigen wird die Schmelzezuführung durch die Drehzahl des zur Plastifizierung des Kunststoffes vorgesehenen Extruder bestimmt.

Wahlweise wird die flüssige Schmelze auch am Ende der Aufwärmstrecke in den Einschneckenmodul/Abschnitt aufgegeben. Dann ist der zur Erzeugung der flüssigen
Schmelze vorgesehene Extruder unmittelbar an den für die Erwärmung des Holzes vorgesehenen Einschneckenmodul/Abschnitt angeschlossen.
Der Anschluß erfolgt wahlweise dadurch, daß der zur Verflüssigung vorgesehene Extruder unmittelbar an das Gehäuse des Einschneckenmoduls/Abschnitts angeflanscht ist, oder es ist eine Zuführungsleitung vorgesehen, die an das Gehäuse des Einschneckenmoduls/Abschnitts führt.
Der unmittelbar an den Einschneckenmodul angeflanschte und der Herstellung flüssiger Schmelze dienende Extruder kann als Seitenarmextruder bezeichnet werden. Dieser Extruder kann die gleiche Bauart haben wie der Einschneckenmodul. Es kann aber auch ein Extruder anderer Bauart zum Einsatz kommen.

Für das Eintragen der flüssigen Schmelze in den Einschneckenmodul/Abschnitt muß dessen Gehäuse durchbohrt werden. Dabei wird der zur Temperierung doppelwandig ausgeführte Gehäusemantel durchbohrt. Damit einerseits die Schmelze nicht in den Hohlmantel strömt und andererseits das Temperierungsmittel nicht die Schmelze verunreinigt, kann ein Flansch angebracht werden, der mit einem Kragen in die Bohrung ragt und den Hohlmantel wieder verschließt.

Zum Eintragen der flüssigen Schmelze kann auch der benachbarte Planetwalzenmodul angebohrt werden.
Auch dort besteht ein Gehäusedoppelmantel, der durch die Bohrung geöffnet wird und wieder geschlossen werden muß.

Nach der DE 10356423 wird das mit einer Buchse dadurch erreicht, daß
die Bohrung durch das Gehäuse hindurchgeführt ist und in die im Gehäuse sitzende Buchse ragt,
wobei die Materialzuführung mit einem Zuführungsgehäuse in die Bohrung ragt und
   aa) wobei die Bohrung im Bereich der zum Temperieren dienenden Kanäle eine ringförmige Erweiterung aufweist, so daß um das Zuführungsgehäuse herum ein ringförmiger Verbindungskanal für die zum Temperieren dienenden Kanäle entsteht oder
   bb) wobei die Bohrung bis in eine Nut reicht, die sich über den gesamten Umfang oder über einen Teil des Umfangs der im Gehäuse sitzenden Buchse erstreckt und deren Breite größer als der Durchmesser des Zuführungsgehäuses ist, so daß um das Zuführungsgehäuse herum ein Verbindungskanal für die dem Temperieren dienenden Kanäle entsteht oder
   cc) wobei ein Zuführungsgehäuse verwendet wird, das in die Buchse ragt, wobei das Zuführungsgehäuse im Bereich der dem Temperieren dienenden Kanäle mit mindestens einem Verbindungskanal für diese Kanäle versehen ist.
Vorteilhafterweise kann der Verbindungskanal nach cc) spanabhebend durch Fräsen oder Drehen außen in die das Zuführungsgehäuse eingearbeitet werden.
Vorzugsweise ist ein Zuführungsgehäuse mit mehreren Verbindungskanälen vorgesehen, so daß jede durch die Bohrung entstandene Unterbrechung eines Kanals durch einen Verbindungskanal aufgehoben bzw. überbrückt worden ist.
Noch weiter bevorzugt ist ein Zuführungsgehäuse mit mehreren Verbindungskanälen, die übereinander liegen. Die einzelnen Verbindungskanäle können als neben einander liegende Nuten in das Zuführungsgehäuse gearbeitet werden. Die Kanäle können außen an dem Zuführungsgehäuse liegen.
Günstig ist dabei, wenn die übereinander liegenden Verbindungskanäle eine Höhe besitzen, die geringer als die Breite ist. Zugleich ist die Breite so groß gewählt, daß die Verbindungskanäle gleichwohl einen ausreichenden Querschnitt zur störungsfreien Weiterleitung des Temperierungsmittels besitzt, vorzugsweise ist der Querschnitt gleich. Günstig ist, wenn die Höhe der Verbindungskanäle so gewählt ist, daß die Gesamthöhe der übereinander liegenden und durch einen Steg voneinander getrennten Verbindungskanäle nicht höher als die Höhe bzw. Tiefe der zum Temperieren dienenden Kanäle in der Buchse ist. Vorteilhafterweise können die übereinander liegenden Kanäle mit das Zuführungsgehäuse in diesem Bereich außen umschließenden Rohrmantel geschlossen werden. Der außen liegende Rohrmantel ist dann mit Einlaßöffnungen und Auslaßöffnungen versehen. Jede Einlaßöffnung ist so angeordnet, daß sie an dem zugehörigen, durch die beschriebene Unterbrechung entstandenen Kanalende liegt.
Wahlweise sind die Verbindungskanäle auch an einer Innenseite des Zuführungsgehäuses eingearbeitet worden und sind die Verbindungskanäle durch einen innen liegenden Rohrmantel verschlossen. Durch außen in das Zuführungsgehäuse eingearbeitete Einlaßöffnungen und Auslaßöffnungen entstehen gleichwohl Verbindungskanäle.
oder
dd) wobei die Bohrung gegenüber dem Zuführungsgehäuse vergrößert ist und wobei in dem Gehäuse ein Einsatz mit einer Öffnung oder einem Anschluß zur Aufnahme des Zuführungsgehäuses vorgesehen ist. Der Einsatz besitzt außen liegend oder innen liegend einen oder mehrere Verbindungskanäle, die wie die Verbindungskanäle unter cc) ausgebildet sind bzw. hergestellt werden.
ee) wobei in der Bohrung ein Einsatz sitzt, an dem das Zuführungsgehäuse befestigt ist und der Einsatz außen liegend oder innen liegend oder innen liegend einen oder mehrere Verbindungskanäle besitzt, die wie die Verbindungskanäle unter cc) ausgebildet sind bzw. hergestellt werden.

Das oben beschriebene Zuführungsgehäuse kann die im Extrudergehäuse sitzende Buchse so weit durchdringen, daß sie mit der Innenfläche der Buchse ganz oder teilweise abschließt. Ist das Zuführungsgehäuse der Innenfläche der Buchse angepaßt und kann ganz mit der Innenfläche der Buchse abschließen. Das kann auch auf innen verzahnte Buchsen eines Extrudergehäuses Anwendung finden. Die Anpassung wird durch Drehen oder Fräsen oder Schleifen bzw. bei der Anpassung an innen verzahnte Gehäusebuchsen dadurch erreicht, daß in die Gehäusewandung eine Verzahnung in gleicher Weise eingearbeitet wird wie beim Innenverzahnen der im Extrudergehäuse sitzenden Buchse. Günstig ist dabei die Anwendung des Funkenerodierens zum Verzahnen.

Im übrigen gilt für den Anschluß des zur Herstellung flüssiger Schmelze dienende an das Gehäuse des Planetwalzenmoduls das gleiche wie für den Anschluß an den Einschneckenmodul.

Der Seitenarmextruder kann verschiedene Bauweisen haben.
Es gibt Einschneckenextruder, Doppelschneckenextruder und Planetwalzenextruder.
Der Einschneckenextruder ist die billigste Bauart eines Extruders, aber auch der Extruder mit der kleinsten Bauweise.
Bei der Verwendung eines Einschneckenextruders soll die Steigung der Schnecke die gewünschte Förderwirkung verursachen.

Der Doppelschneckenextruder besitzt zwei parallel nebeneinander angeordnete und miteinander kämmende Schnecken. Der Doppelschneckenextruder ist zwar aufwendiger als ein Einschneckenextruder. Der Doppelschneckenextruder hat jedoch eine wesentlich größere Förderwirkung als ein Einschneckenextruder. Gleichwohl ist der Doppelschneckenextruder noch verhältnismäßig günstig. Außerdem baut der Doppelschneckenextruder noch sehr klein. Aufgrund der hohen Förderwirkung läßt sich mit dem Doppelschneckenextruder leicht sicherstellen, daß die flüssige Schmelze mit dem richtigen Druck in den Planetwalzenmodul eingespritzt wird.

Wahlweise wird für diesen Seitenarmextruder auch ein Planetwalzenteil verwendet. In der Anwendung kann auch dieser Planetwalzenteil so gefahren werden, daß der notwendige Druck zum Einspritzen der flüssigen Schmelze entsteht.

In der Zeichnung sind verschiedene Ausführungsbeispiele der Erfindung dargestellt.

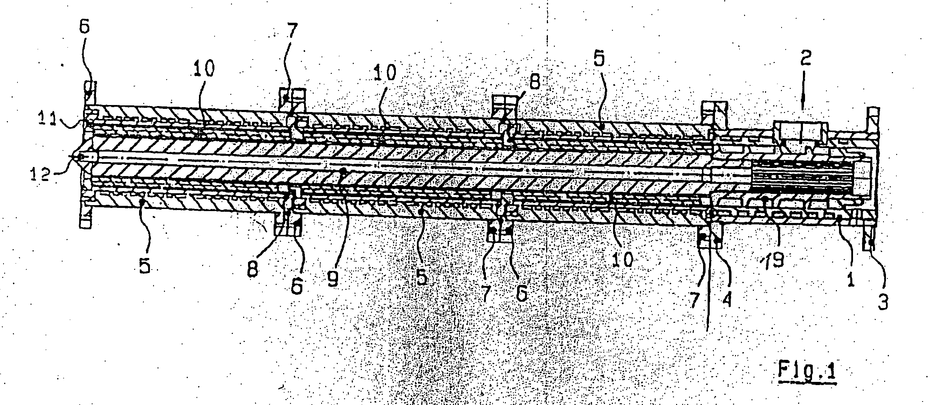

Fig. 1 zeigt einen Extruder für die Herstellung von Mischungen aus Kunststoff und Holzpartikeln. Der Extruder besitzt vier Abschnitte. Drei Extruderabschnitte sind als Planetwalzenextruderabschnitte ausgebildet, der vierte Extruderabschnitt ist als Einschneckenextruder ausbildet und dient dem Materialeinzug.
Dabei sind mit 5 die Gehäuse der Planetwalzenextruderabschnitte und das Gehäuse des Einschneckenextruderabschnittes mit 1 bezeichnet. Jedes Gehäuse 5 besitzt angeschweißte Flansche 6 und 7, die in nicht dargestellter Form mit- einander verschraubt sind. Das Gehäuse 1 ist mit Flanschen 3 und 4 versehen, die wie die Flansche 6 und 7 der Befestigung dienen. Jedes Gehäuse 1 und 5 ist innen mit Buchsen ausgekleidet.
Ferner sind an der Gehäuseinnenseite Kanäle dargestellt, die je nach Bedarf mit Heizmittel oder Kühlmittel beaufschlagt werden.

Die dargestellten Enden der Gehäuse 5 sind hinten ausgedreht und jeweils mit einem Zentrierring 11 und Anlaufring und Verschleißring 8 versehen.
Der Anlaufring und Verschleißring 8 bildet die Gleitfläche für Planetspindeln 10. Der Anlaufring und Verschleißring 8 besitzt einen Innendurchmesser der kleiner als der bezeichnete Rollradius der Planetspindeln 10 ist.

Alle Extruderabschnitte besitzen eine gemeinsame Spindel. Diese gemeinsame Spindel ist im Bereich der Planetwalzenextruderabschnitte mit 9 und im Bereich des als Einzug dienenden Einschneckenextruderabschnittes mit 19 bezeichnet.
Das Einsatzmaterial wird im Ausführungsbeispiel durch Holzspäne gebildet. Die Holzspäne werden über einen Trichter durch eine Öffnung 2 eindosiert. Die Holzspäne werden in nicht dargestellter Weise mittels Saugluftförderer aus einem Silo abgezogen und in einen über dem Trichter angeordneten Filter geführt und von der Saugluft getrennt. Mittels einer nicht dargestellten Stopfschnecke werden die Holzspäne aus dem Filter in den Trichter gezogen. Im Trichter findet eine volumenmetrische Messung der Menge der Sägespäne statt. In anderen Ausführungsbeispielen ist eine zusätzliche gravimetrische Messung oder allein eine gravimetrische Messung vorgesehen. Anhand der Messergebnisse wird der Saugluftförderer geregelt.

Der erste Extruderabschnitt bildet einen Einzug für den zweiten Extruderabschnitt. Im zweiten Extruderabschnitt findet eine Zudosierung und Mischung mit flüssiger Kunststoffschmelze und eine Verdichtung statt; im dritten Extruderabschnitt eine Homogenisierung der Mischung. Im letzten Extruderabschnitt findet eine Abkühlung der Mischung auf Austrittstemperatur statt. Im Ausführungsbeispiel hat das Holz einen Anteil von 70Gew% und der Kunststoff einen Anteil von 30Gew% an der Mischung. In anderen Ausführungsbeispielen beträgt der Holzanteil zum Beispiel 65% oder 75% an der Mischung. Dabei sind Zuschläge wie Farbe und Hydrophobierungsmittel dem Kunststoffanteil rechnerisch zugeschlagen worden.

Die entstandene Mischung tritt an der Extruderspitze 12 in eine nicht dargestellte Extrusionsdüse, deren Öffnung dem Querschnitt einer Bodendiele nachgebildet ist, so daß durch Extrudieren der Mischung ein Endlosstrang mit dem Querschnitt einer Bodendiele entsteht. Durch nicht dargestelltes Ablängen des Extrusionsstranges entstehen Bodendielen mit dem Aussehen einer Holzdiele.

Die Bodendielen sind unterseitig profiliert. Die Profile sind so gewählt, daß eine Wandstärke von 10mm gegeben ist. In anderen Ausführungsbeispielen sind 8 bis 12 mm Wandstärke gewählt.
Die Profilierung schließt eine Hohlraum bzw. Kammerbildung ein.

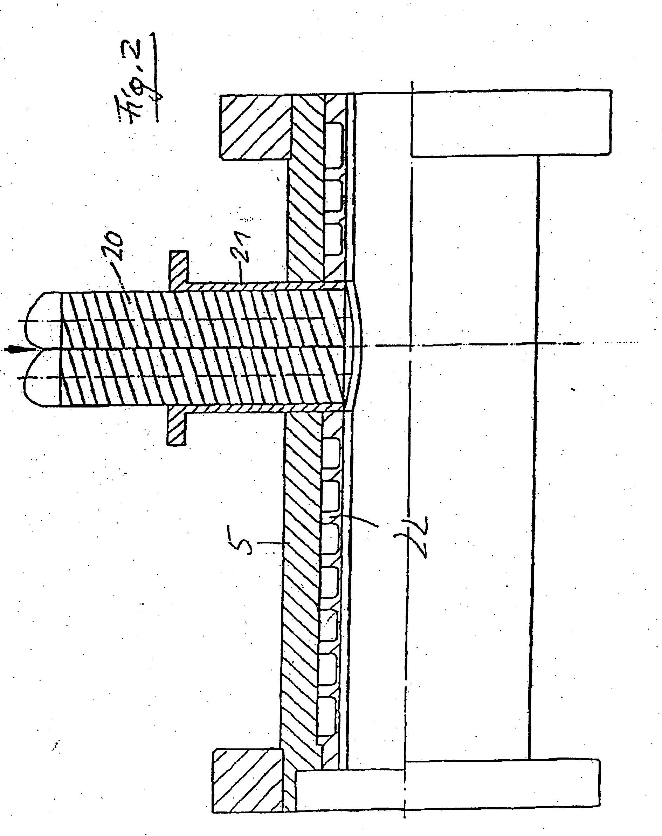

In Fig. 2 ist zum Eintragen der flüssigen Schmelze an dem Planetwalzenteil 5 ein Seitenarmextruder 20 vorgesehen.
Der Seitenarmextruder ist als Doppelschneckenextruder ausgebildet. Der Doppelschneckenextruder besteht aus zwei gegenläufig arbeitenden Schnecken. In den Seitenarmextruder 20 werden in nicht darstellter Form Kunststoffgranulate, im Ausführungsbeispiel Polyethylen(PE)granulate eingefüllt, komprimiert und erwärmt und auf dem Wege zu einer flüssigen Schmelze umgeformt. Mit dem PE-Granulat sind zugleich Zuschläge wie Farbe und Hydrophobierungsmittel aufgegeben worden. In der Schmelze finden die Zuschläge eine vorteilhafte Verteilung.

Mit dem Doppelschneckenextruder kann die flüssige Schmelze mit erheblichem Druck in den Planetwalzenteil 5 gespritzt werden. Die flüssige Schmelze benetzt die Holzpartikel an der Oberfläche und dringt in die Hohlräume/Poren ein. Bei der anschließenden Verdichtung der Holzpartikel werden die Hohlräume/Poren reduziert und durch die Schmelze verschlossen, die bei dem Einspritzen der Schmelze noch offen geblieben sind. Die Schmelze wird mit einer Temperatur aufgegeben, bei der die Schmelze auch dann noch flüssig bleibt, wenn Sie durch die Berührung mit den Holzpartikeln Wärme abgegeben hat.

Zwischen den verschiedenen Holzpartikeln wirkt die Schmelze wie ein Kleber.

Das Gehäuse des Seitenarmextruders 20 ist mehrteilig. Der Kopfteil 21 sitzt als Zuführungsgehäuse in einer Bohrung des Gehäuses des Planetwalzenteils 5. Die Bohrung durchdringt zugleich die zugehörige Buchse 22 und schließt mit der Innenfläche der Buchse 22 ab.

Im Ausführungsbeispiel ist der Seitenarmextruder geeignet, sehr hohe Eintragsdrücke zu erzeugen.

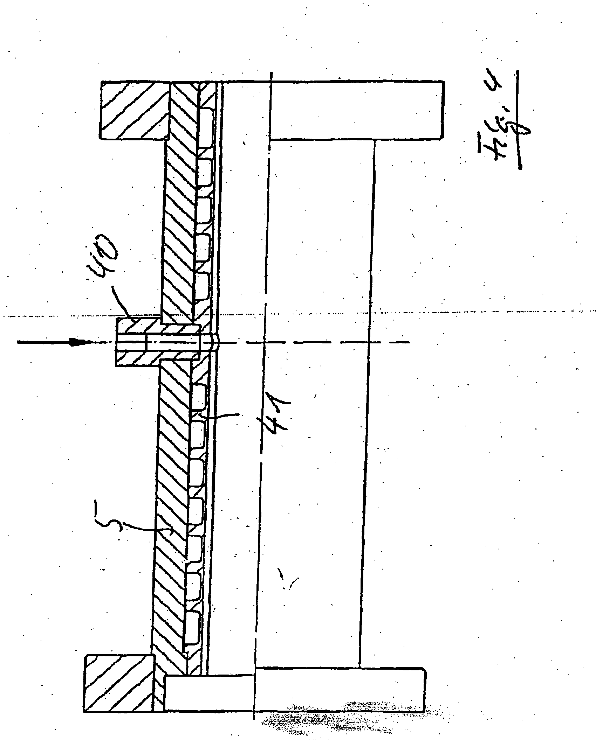

Im Ausführungsbeispiel der Fig. 1 wird der in Fig. 4 dargestellte Planetwalzenteil 5 unmittelbar nach dem Materialeinzug bzw. unmittelbar nach dem Füllteil eingesetzt. In einem anderen Ausführungsbeispiel kommt der Planetwalzenteil 5 mit dem Seitenarmextruder nach dem zweiten Planetwalzenteil als dritter Planetwalzenteil zum Einsatz.
In weiteren Ausführungsbeispielen kann jedes Planetwalzenteil mit einem Seitenarmextruder zum Eintragen von flüssiger Schmelze versehen sein.

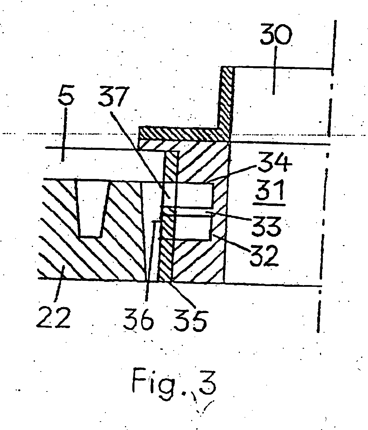

In einem weiteren Ausführungsbeispiel nach Fig. 3 reicht das mit 30 bezeichnete Extrudergehäuse des Seitenarmextruders bis an das Gehäuse 30 des Planetwalzenteiles 5 heran. Das Extrudergehäuse 30 ist mit einem Einsatz 31 verbunden, der in einer Bohrung des Gehäuses 5 sitzt. Der Einsatz 31 besitzt an seiner Außenseite zwei übereinander liegende Nuten 32 und 34. Zwischen beiden Nuten 32 und 34 besteht ein Steg 33. Diese Nuten bilden Verbindungskanäle. Es sind zwei Verbindungskanäle vorgesehen, weil das Gehäuse mit einer Buchse 22 ausgekleidet ist und weil die Buchse 22 außenseitig und innenseitig mit einer Verzahnung versehen ist. Die nicht dargestellte Innenverzahnung dient dazu, mit den umlaufenden Planetenspindeln zu kämmen, die in Fig. 1 dargestellt sind. Die Außenverzahnung bildet Kanäle für das Temperierungsmittel für die Beheizung/Kühlung des Planetwalzenteiles. Die Außenverzahnung der Buchse 22 wird durch die zugehörige Bohrung für den Einsatz 31 an zwei Stellen unterbrochen. Jeder Verbindungskanal ist für eine Unterbrechung bestimmt und verbindet das eine Unterbrechungsende mit dem zugehörigen anderen Unterbrechungsende.
Die Nuten 32 und 34 sind durch einen außen liegenden Rohrmantel 35 verschlossen, so daß kein Heizmittel oder Kühlmittel falsch eintreten oder austreten kann.
Im Ausführungsbeispiel ist eine Eintrittsöffnung 37 der Nut 34 dargestellt. Die Eintrittsöffnung der Nut 32 liegt an anderer, nicht dargestellter Stelle.
Die Austrittsöffnung liegt im Ausführungsbeispiel auf der diametral gegenüberliegenden, nicht dargestellten Seite des Einsatzes 31.

Das Ausführungsbeispiel nach Fig. 4 zeigt die Anwendung eines Extruders für die Schaumherstellung. Dabei wird über einen Einsatz 40, der in dem Extrudergehäuse 5 sitzt, flüssiges Treibmittel in die Kunststoffschmelze gepumpt.
Im Bereich der Buchse 41 ist ein nicht dargestellter Einsatz vorgesehen, der sich von dem Einsatz nach Fig. 3 dadurch unterscheidet, daß nur ein Verbindungskanal vorgesehen ist.

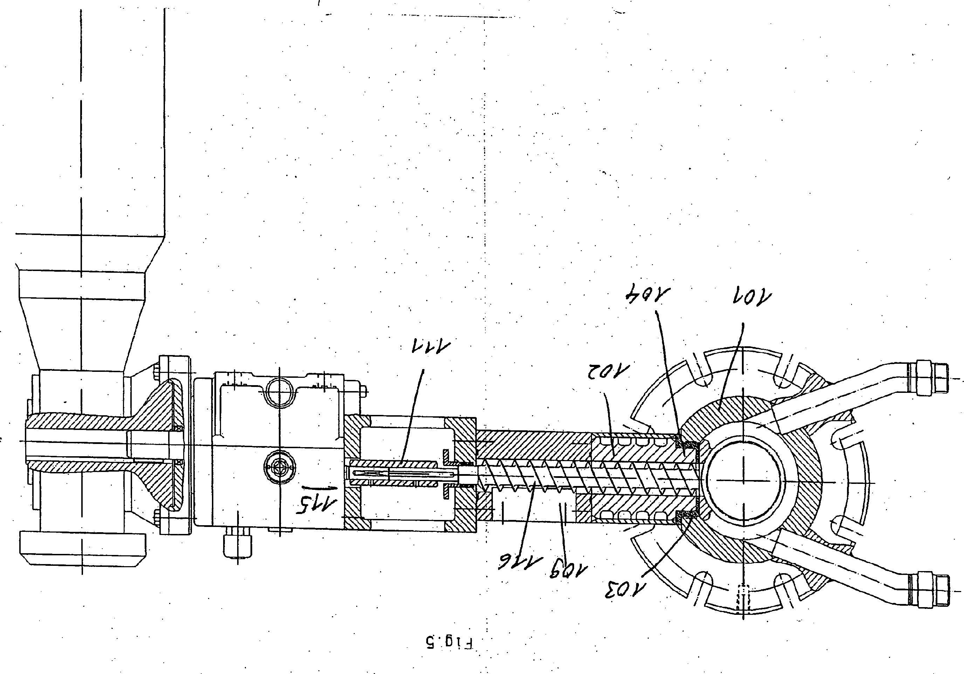

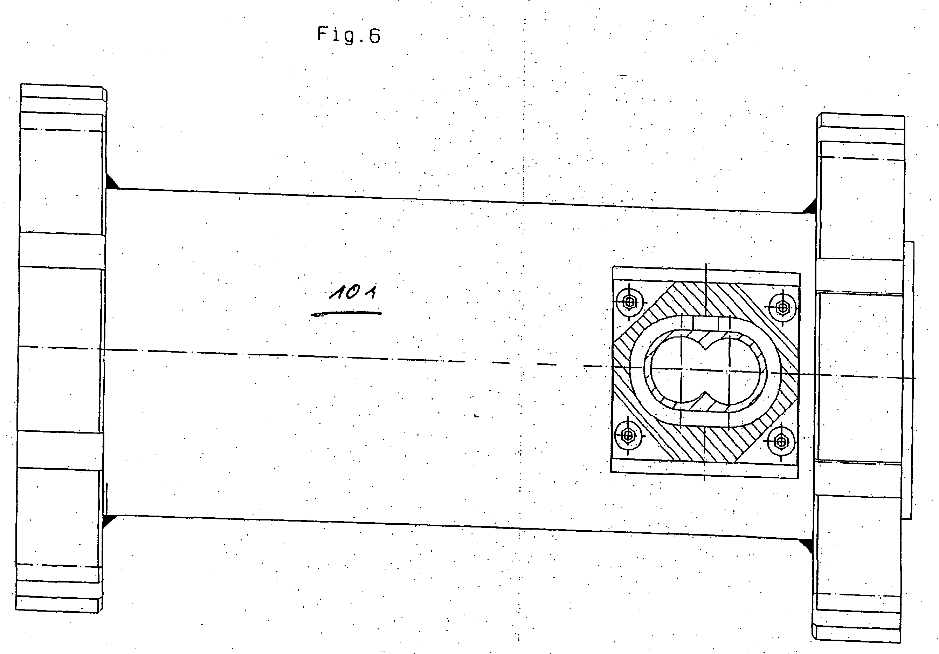

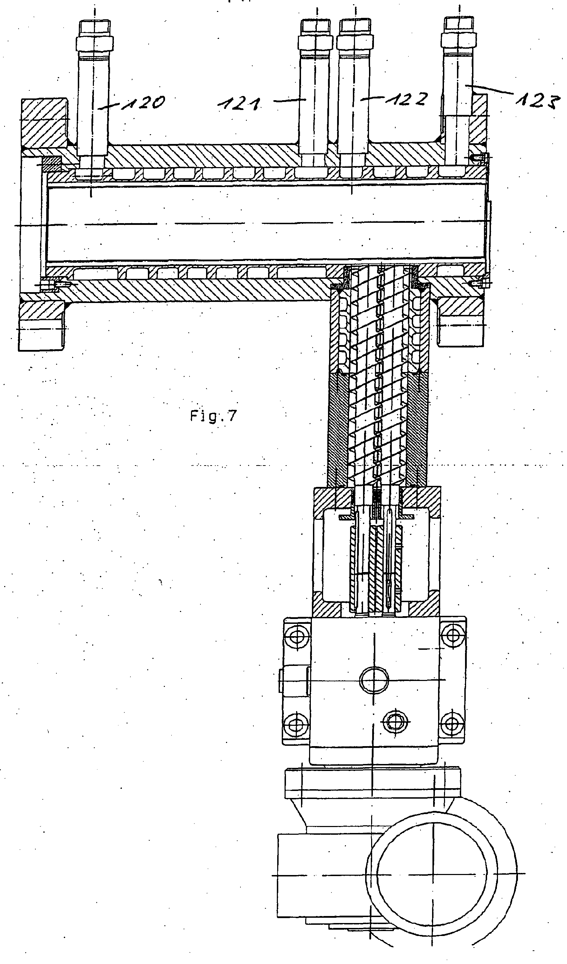

Die Fig. 5 bis 7 zeigen einen weiteren Extruder mit einem Planetwalzenmodul mit einem Gehäuse 101 und einem angeflanschten Seitenarmextruder.

Der Planetwalzenmodul besitzt ein Extrudergehäuse mit einer darin angeordneten Buchse. Das Gehäuse ist auf der Buchse aufgeschrumpft.
Die Buchse besitzt außenseitig eingefräste Kanäle für Temperierungsmittel zur Kühlung oder Beheizung.
Die Kanäle verlaufen wendelförmig an der Außenfläche der Buchse und sind durch Fräsen entstanden. Es sind im Ausführungsbeispiel zwei verschiedene Temperierungsbereiche vorgesehen. Der eine Bereich ist durch Zu- und Abflüsse 120, 121 gekennzeichnet, der andere Bereich durch Zu- und Abflüsse 122, 123.

Der Seitenarmextruder ist ein Doppelschneckenextruder und besteht aus verschiedenen Teilen. Dazu gehören zwei nebeneinander angeordnete Schnecken 116, welche miteinander kämmen und über einen Motor angetrieben werden. Zwischen Motor und Schnecken 116 sind ein Getriebe und eine Kupplung 111 mit einem Gehäuse 115 vorgesehen.
Außerdem ist der Seitenarmextruder aus einem Füllteil 109 und einem Extrusionsteil 102 zusammengesetzt. Das Füllteil 109 besitzt eine Öffnung für eine nicht dargestellte Materialzuführung.

Der Seitenarmextruder besitzt im Extrusionsteil 102 ein temperiertes Gehäuse.
Das Gehäuse besitzt ein gestuftes Ende 104, mit dem es in einer Bohrung 103 sitzt, die sich durch das Gehäuse des Planetwalzenteiles 101 und durch die zugehörende Buchse bis in den Innenraum des Planetwalzenmodules erstreckt. Die Bohrung bedingt in dem Bereich der Zu- und Abflüsse 122,123 eine besondere Führung der für das Temperierungsmittel vorgesehen Kanäle an der Außenseite der Buchse. Dort sind die Kanäle um den Bereich der Bohrung herumgeführt worden, so daß auch die Umgebung der Bohrung temperiert wird.

Zusätzliche Möglichkeit zur Temperierung ergibt sich in der Umgebung durch das temperierte vordere Ende des Seitenarmextruders.

Die Bohrung führt durch die oben beschriebene Stufung zu einer Aufstandsfläche 102 am Gehäuse.

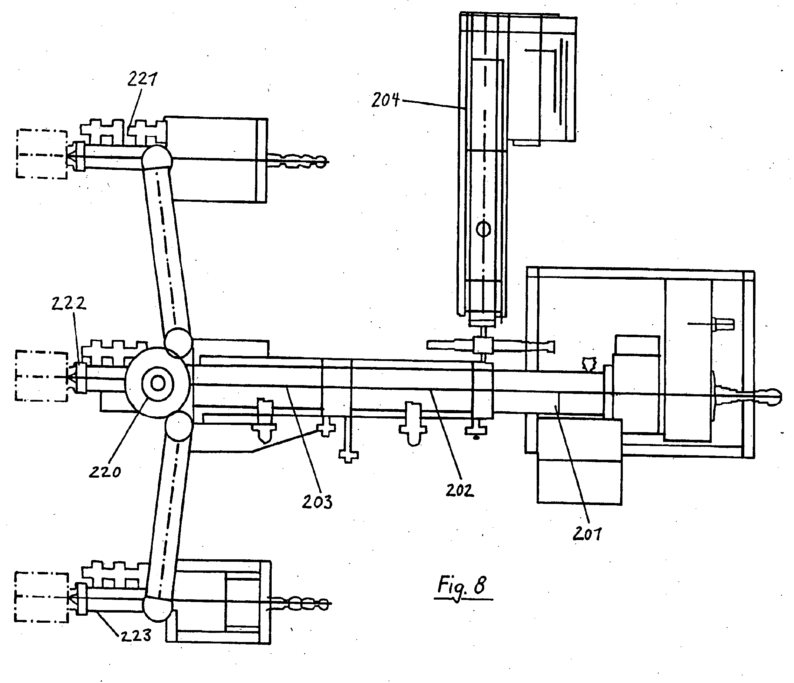

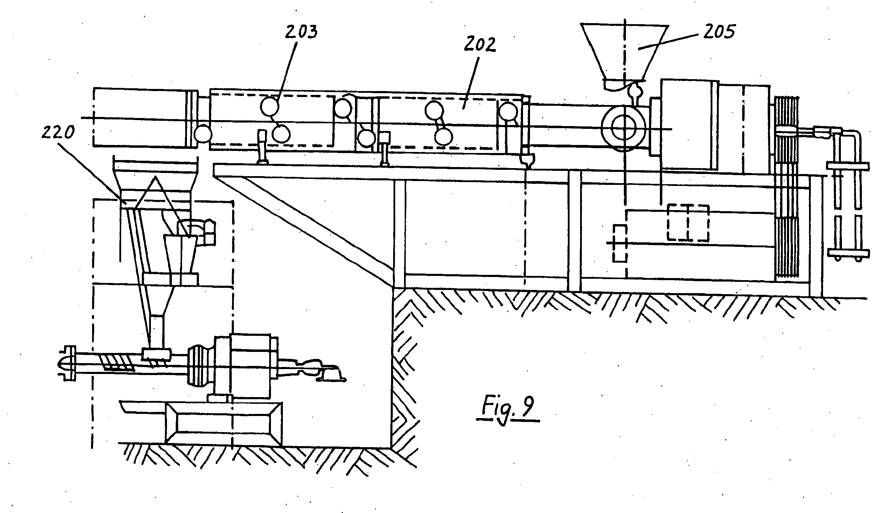

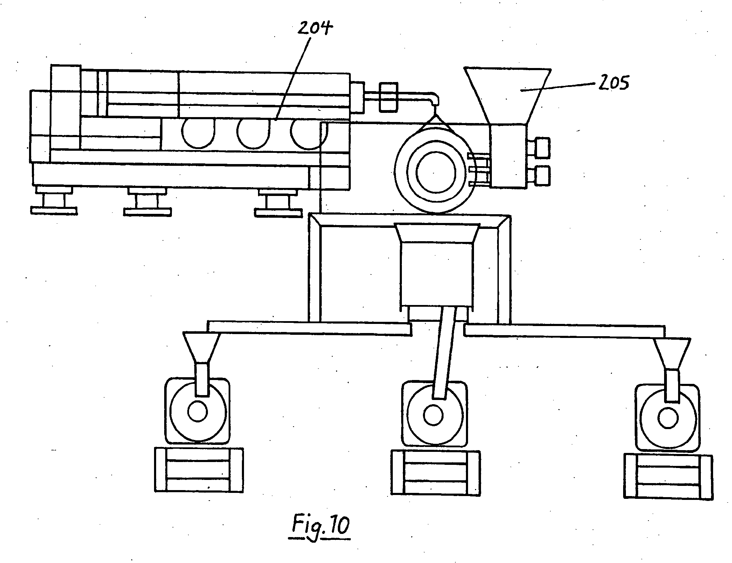

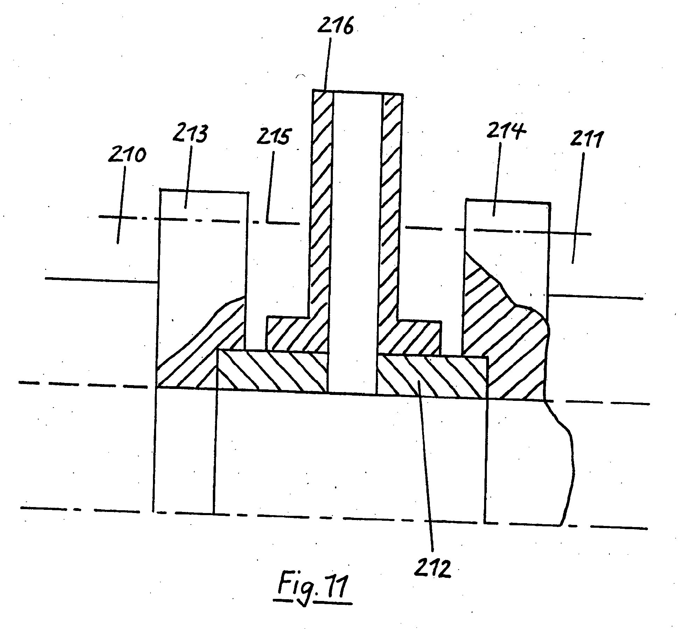

Die Fig. 8 bis 10 zeigen in einem weiteren Ausführungsbeispiel eine vollständige Anlage zur Herstellung von Mischungen aus Holzpartikeln und Kunststoff.
Dabei findet ein Extruder mit einem Füllteil 201 und zwei Planetwalzenteilen 202 und 203 Anwendung. Der Füllteil 201 besitzt die Bauart einer Einschnecke und entspricht im Prinzip dem Einschneckenteil bzw. Füllteil der Fig. 1. Die beiden Planetwalzenteile 202 und 203 entsprechen im Prinzip den Planetwalzenteilen 5 und 10 der Fig. 1.
Das Füllteil 201 wird aus einem Trichter 205 mit Sägespänen gespeist. Die Holzpartikel werden in dem Einfüllteil eingezogen und geringfügig vorgewärmt.
Zu der Anlage gehört ferner ein seitlich angeordneter Extruder 204. Der seitlich angeordnete Extruder 204 ist ein Einschneckenextruder und dient zur Aufschinelzung des Kunststoffes. Der seitlich angeordnete Extruder spritzt die flüssige Schmelze zwischen dem Füllteil 201 und dem Planetwalzenteil 202 in den Extruder.
Zwischen dem Füllteil 201 und dem Planetwalzenteil 202 ist ein Zwischenring vorgesehen. Der Zwischenring ist in Fig. 11 dargestellt. In Fig. 11 sind die Gehäuse des Einfüllteiles 201 mit 211 und das Gehäuse des Planetwalzenteiles 202 mit 210 bezeichnet. Die beiden gegenüberliegenden Gehäuseenden sind mit einem Kragen 214 und 213 versehen. Zwischen beiden Kragen ist ein Zwischenring 212 eingelassen. Der Zwischenring 212 ist in Zentrieröffnungen an den Stirnflächen der Kragen eingelassen. Der Zwischenring 212 besitzt mehrere gleichmäßig am Umfang verteilte Öffnungen, zu denen Schmelzeleitungen 216 von dem Extruder 204 führten. Der Zwischenring 212 ist zwischen den Kragen 211 und 213 verspannt. Die Verspannung wird durch Spannschrauben bewirkt, von denen nur eine Mittellinie 215 dargestellt ist. Die Spannschrauben durchdringen beide Kragen und wirken mit Schraubenmuttern zusammen.

Nach dem Zusammentreffen von flüssiger Schmelze und Holzpartikeln findet in dem Planetwalzenteil 202 die Mischung und Homogenisierung und eine Verdichtung statt. Im sich daran anschließenden Planetwalzenteil findet eine Kühlung auf eine gewünschte Austrittstemperatur statt. Im Ausführungsbeispiel ist die Temperatur der Mischung noch so groß, daß die Mischung ausdampft und auf dem Wege unerwünschte Feuchte verliert.

Nach dem Austritt und Ausdampfen findet im Ausführungsbeispiel eine Verteilung der Mischung statt auf mehrere weitere Extruder statt.. Dazu ist eine Verteilungseinrichtung 220 vorgesehen. Die Verteilungseinrichtung 220 führt die Mischung zu drei nachgeordneten Einschneckenextrudern 221, 222 und 223. Diese Einschneckenextruder können einzeln oder zu mehreren oder alle gemeinsam gleichmäßig oder unterschiedlich mit der Mischung beaufschlagt werden. Ziel ist, nach Bedarf unterschiedliche oder gleiche Profilformate mit den Einschneckenextrudern 221, 222 und 223 zu extrudieren.

Im Ausführungsbeispiel wird die Verteilungseinrichtung durch eine Weiche in dem Förderweg der Mischung nach Verlassen des Extruders gebildet. Mit der Weiche kann die angefördert Menge an Mischung zu bestimmten Einschneckenextrudern umgelenkt oder auch in zwei oder drei Ströme geteilt werden, die dann den betreffenden Einschneckenextrudern zugeleitet werden.

## Patentansprüche

1. Herstellung von Mischungen aus Holzpartikeln und/oder anderen Pflanzenpartikeln mit Kunststoff einer Extrusionsanlage,
a)mit einem Füllteil (201), einem Planetwalzenextruder oder Planetwalzenextruderabschnitt (202,203) und einem Nebenextruder oder Seitenarmextruder (204),
b)wobei die Holzpartikel in das Füllteil (201) aufgegeben werden und mit dem Füllteil (201) in den Planetwalzenextruder oder Planetwalzenextruderabschnitt (202,203) eingetragen werden,
c)wobei der Kunststoff in Granulat form in den Nebenextruder oder Seitenarmextruder (204) aufgegeben wird, darin aufgeschmolzen wird und die Schmelze separat in den Planetwalzenextruder oder Planetwalzenextruderabschnitt (202,203) eingetragen wird
d)wobei die Holzpartikel in dem Planetwalzenextruder oder Planetwalzenextruderabschnitt (202,203) mit der Schmelze gemischt und homogenisiert werden,
e)wobei die Holzpartikel in der Mischung mindestens 60Gew%, vorzugsweise mindestens 65Gew% ausmachen,
f)anschließend die Mischung aus dem Planetwalzenextruder oder Planetwalzenextruderabschnitt (202,203) ausgetragen wird und
g)eine Verdichtung der Mischung erfolgt, wobei die Mischung durch eine Extrusionsdüse aus dem Extruder gepresst wird, die sich in Förderrichtung des Extruders am Ende des Extruders befindet.

2. Verfahren nach Anspruch 1, **gekennzeichnet durch** die Verwendung von Holzpartikeln bzw. Pflanzenpartikeln mit einer Partikelgröße von höchstens 1 mm, vorzugsweise mit einer Partikelgröße von höchsten 0,8mm, noch weiter bevorzugt mit einer Hauptmenge mit einer Partikelgröße von 0,3 bis 0,4mm, wobei die Hauptmenge einen Anteil von mindestens 50%, vorzugeweise mindestens 60% an der Menge der Holzpartikel bzw. Pflanzenpartikel ausmacht.

3. Verfahren nach Anspruch 1 oder 2, **dadurch gekennzeichnet, daß** Zuschläge wie Farben, Koppler und Haftvermittler, Stabilisatoren, Gleitmittel und Hydrophobierungsmittel vor der Vermischung mit den Holzpartikeln bzw. den Pflanzenpartikeln mit der Kunststoffschmelze vermischt werden

4. Verfahren nach einem der Ansprüche 1 bis 3, **gekennzeichnet durch** die Verwendung von vorgewärmten Holzpartikeln bzw. Pflanzenpartikeln.

5. Verfahren nach Anspruch 4, **gekennzeichnet durch** eine Vorwärmtemperatur der Holzpartikel bzw. Pflanzenpartikel von mindestens 50 Grad Celsius, vorzugsweise von mindestens 100 Grad Celsius und höchst bevorzugt von mindestens 150 Grad Celsius.

6. Verfahren nach Anspruch 4 oder 5, **gekennzeichnet durch** die Vorwärmung der Holzpartikel bzw. Pflanzenpartikel außerhalb des Extruders

7. Verfahren nach einem der Ansprüche 1 bis 6, **dadurch gekennzeichnet, daß** das Hohlraumvolumen der Holzpartikel und/oder Pflanzenpartikel durch das Verdichten um mindestens 10%, vorzugsweise um mindestens 20% gegenüber dem Ausgangsvolumen verringert wird.

8. Verfahren nach einem der Ansprüche 1 bis 6, **dadurch gekennzeichnet, daß** die Kunststoffschmelze am Anfang des Planetwalzenextruders bzw. Planetwalzenextruderabschnittes zugegeben wird.

9. Verfahren nach einem der Ansprüche 1 bis 8, **dadurch gekennzeichnet, daß** der separat verflüssigte Kunststoff unter Druck mit den Holzpartikeln und/oder Pflanzenpartikeln zusammen geführt wird.

10. Verfahren nach Anspruch 9, **dadurch gekennzeichnet, daß** der verflüssigte Kunststoff gegen die Holzpartikel und/oder Pflanzenpartikel gespritzt wird.

11. Verfahren nach einem der Ansprüche 1 bis 10, **dadurch gekennzeichnet, daß** die Mischung in einer Hitze zu Profilen verarbeitet wird und/oder daß die ausextrudierte Mischung granuliert wird

12. Verfahren nach einem der Ansprüche 1 bis 12, **gekennzeichnet durch** Verwendung eines Einschneckenextruders oder Einschneckenmoduls als Füllteil (204).

13. Verfahren nach einem oder mehreren der Ansprüche 1 bis 12, **gekennzeichnet durch** Verwendung von Enschneckenextrudern (221,222,223) zur Verdichtung nach der Mischung.

14. Verfahren nach einem der Ansprüche 1 bis 13, **dadurch gekennzeichnet, daß** die Schmelze zwischen dem Füllteil (201) und dem Planetwalzenextruder oder Planetwalzenextruderabschnitt (202,203) aufgegeben wird.

15. Verfahren nach Anspruch 14, **gekennzeichnet durch** die Verwendung eines Zwischenringes zwischen dem Füllteil (201) und dem Planetwalzenextruder bzw. Planetwalzenextruderabschnitt (202,203), wobei die flüssige Schmelze am Zwischenring eingetragen wird.

16. Verfahren nach Anspruch 15, **gekennzeichnet durch** die Verwendung eines Zwischenringes,
a)der den Gehäusen des Füllteiles (201) und/oder des Planetwalzenextruders bzw. Planetwalzenextruderabschnitt (202,203) nachgebildet ist und Kragen besitzt, mit denen der Zwischenring an dem benachbarten Kragen des Füllteiles (201) und an dem benachbarten Kragen des Planetenextruders bzw. Planetwalzenextruderabschnittes (202) befestigt ist
oder
b)der allein **dadurch** zwischen dem Planetwalzenextruder bzw. Planetwalzenextruderabschnitt (202) und dem Füllteil (201) gehalten ist, daß der benachbarte Kragen des Planetwalzenextruders bzw. Planetwalzenextruderabschnittes (202) mit dem benachbarten Kragen des Füllteiles (201) verspannt ist.

17. Verfahren nach Anspruch 15 oder 16, **gekennzeichnet durch** die Verwendung eines Zwischenringes, der in eine Zentrieröffnung in der Stirnfläche des benachbarten Teiles greift oder umgekehrt der Planetwalzenextruder oder Planetwalzenextruderabschnitt (202) und das Füllteil (201) in eine Zentrieröffnung an der Stirnfläche des Zwischenringes greifen.

18. Verfahren nach einem der Ansprüche 1 bis 17, **gekennzeichnet durch**
a)Verwendung eines Nebenextruders/Seitenarmextruders (204) für die Aufschmelzung von Kunststoff, der am Anfang des Planetwalzenteilextruders oder Planetwalzenextruderabschnittes (202) oder am Zwischenring angeflanscht ist
oder
b)Verwendung eines Nebenextruders/Seitenarmextruders (204) für die Aufschmelzung von Kunststoff, der über eine Schmelzeleitung mit dem Anfang des Planetenextruders oder Planetwalzenextruderteiles (202) oder über die Schmelzeleitung mit dem Zwischenring verbunden ist.

19. Verfahren nach Anspruch 18, **gekennzeichnet durch** die Verwendung eines Doppelschneckenextruders oder Doppelschneckenextruderteils oder Einschneckenextruders oder Einschneckenteils als Nebenextruders/Seitenarmextruder (204) für die Aufschmelzung des Kunststoffes.

20. Verfahren nach Anspruch 18 oder 19,
**gekennzeichnet durch** die Herstellung der Mischung
in einem Planetwalzenextruder oder Planetwalzenextruderabschnitt (202), wobei Kunststoffschmelze in einem Seitenarmextruder (204)erzeugt wird, wobei für den Seitenarmextruder (204) eine Bohrung **durch** das Extrudergehäuse und in die darin sitzende Buchse des Planetwalzenextruders oder Planetwalzenestruderabschnittes (202) ragt,
wobei in die Bohrung ein Zuführungsgehäuse oder Rohr oder Einsatz ragt und die Bohrung im Bereich der für das Temperierungsmittel vorgesehenen Kanäle eine Erweiterung besitzt, so daß zwischen dem in die Bohrung ragende Zuführungsgehäuse oder Rohr oder Einsatz und der Innenwand der Bohrung ein Abstand besteht, der einen Hohlraum bildet und daß der Hohlraum die vorher durch die Bohrung bzw. das Zuführungsgehäuse oder Rohr oder Einsatz unterbrochenen Kühlmittelkanäle oder Heizmittelkanäle verbindet.

21. Verfahren nach Anspruch 20, **gekennzeichnet durch** die Verwendung eines Extrudergehäuses, das an der im Extrudergehäuse sitzenden innen verzahnten Buchse im Bereich der Känale für das Temperierungsmittel eine Nut besitzt, die sich um Umfang der Buchse über den gesamten Umfang oder über einen Teil es des Umfanges erstreckt und deren Breite größer ist als der Durchmesser des Zuführungsgehäuses oder der Durchmesser des der Materialzuführung dienenden Rohres oder Einsatzes

22. Verfahren nach Anspruch 21, **gekennzeichnet durch** die Verwendung eines Extrudergehäuses
mit einer innen liegenden Buchse, die außen mit Kanälen für eine Temperierungsmittel versehen ist, und
mit einer das Gehäuse für die Zuführung von Schmelze durchdringenden Bohrung,
im Durchdringungsbereich ein Einsatz vorgesehen ist, der mindestens einen Verbindungskanal für die zur Durchleitung von Temperierungsmittel bestimmten Kanäle besitzt.

23. Verfahren nach Anspruch 22, **gekennzeichnet durch** die Verwendung eines Extrudergehäuses mit einer innen liegenden Buchse, die außen mit Kanälen für ein Temperierungsmittel versehen ist, und eine Anschlußbohrung für einen Seitenarmextruder (204) aufweist, wobei die Kanäle für das Temperierungsmittel um die Anschlußbohrung herum geführt ist.

## Claims

1. Production of blends of wood particles and/or other vegetal particles with plastic in an extrusion line,
with a feed section (201), a planetary roller extruder or planetary roller extruder section (202, 203) and an ancillary extruder or side-arm extruder (204),
b) wherein the wood particles are fed into the feed section (201) that conveys them into the planetary roller extruder or planetary roller extruder section (202, 203),
c) wherein the plastic, in granular form, is fed into the ancillary extruder or side-arm extruder (204), melted therein and the melt is separately conveyed into the planetary roller extruder or planetary roller extruder section (202, 203)
d) wherein the wood particles are mixed with the melt and homogenised in the planetary roller extruder or planetary roller extruder section (202, 203),
e) wherein the wood particles in the blend make up at least 60 wt %, preferably at least 65 wt %,
f) the blend is then discharged from the planetary roller extruder or planetary roller extruder section (202, 203) and
g) the blend is compacted, wherein the blend is forced out of the extruder through an extrusion die that is located in the flow direction at the end of the extruder.

2. Process according to claim 1, **characterised by** the use of wood particles or vegetal particles with a maximum particle size of 1mm, preferably with a maximum particle size of 0.8mm, even more preferably with the main amount having a particle size of 0.3 to 0.4mm, wherein the main amount makes up a fraction of at least 50%, preferably at least 60% of the amount of the wood particles or vegetal particles.

3. Process according to claim 1 or 2, **characterised in that** additives such as colours, coupling agents and adhesion promoters, stabilisers, slip additives and water repellents are blended with the plastic melt prior to blending with the wood particles or the vegetal particles

4. Process according to one of claims 1 to 3, **characterised by** the use of preheated wood particles or vegetal particles.

5. Process according to claim 4, **characterised by** a pre-heat temperature of the wood particles or vegetal particles of at least 50°C, preferably at least 100°C and most preferably at least 150°C.

6. Process according to claim 4 or 5, **characterised by** pre-heating the wood particles or vegetal particles outside the extruder.

7. Process according to one of claims 1 to 6, **characterised in that** the void volume of the wood particles and/or vegetal particles is reduced by the compaction by at least 10%, preferably by at least 20% with respect to the initial volume.

8. Process according to one of claims 1 to 6, **characterised in that** the plastic melt is added at the beginning of the planetary roller extruder or planetary roller extruder section.

9. Process according to one of claims 1 to 8, **characterised in that** the separately liquefied plastic is combined together with the wood particles and/or vegetal particles under pressure.

10. Process according to claim 9, **characterised in that** the liquefied plastic is injected against the wood particles and/or vegetal particles.

11. Process according to one of claims 1 to 10, **characterised in that** the blend is hot-processed into profiles and/or the extruded blend is pelletised.

12. Process according to one of claims 1 to 12, **characterised by** the use of a single-screw extruder or single-screw module as the feed section (204).

13. Process according to one or more of claims 1 to 12, **characterised by** the use of single-screw extruders (221, 222, 223) for the compaction after the mixing.

14. Process according to one of claims 1 to 13, **characterised in that** the melt is added between the feed section (201) and the planetary roller extruder or planetary roller extruder section (202, 203).

15. Process according to claim 14, **characterised by** the use of an intermediate ring between the feed section (201) and the planetary roller extruder or planetary roller extruder section (202, 203), wherein the liquid melt is conveyed to the intermediate ring.

16. Process according to claim 15, **characterised by** the use of an intermediate ring,
a) that is matched to the housings of the feed section (201) and/or of the planetary roller extruder or planetary roller extruder section (202, 203) and possesses collars, with which the intermediate ring is fixed on the neighbouring collar of the feed section (201) and on the neighbouring collar of the planetary roller extruder or planetary roller extruder section (202)
or
b) that is held solely between the planetary roller extruder or planetary roller extruder section (202) and the feed section (201) such that the neighbouring collar of the planetary roller extruder or planetary roller extruder section (202) is clamped with the neighbouring collar of the feed section (201).

17. Process according to claim 15 or 16, **characterised by** the use of an intermediate ring that engages into a central opening in the front surface of the neighbouring part or conversely the planetary roller extruder or planetary roller extruder section (202) and the feed section (201) engage into a central opening on the front surface of the intermediate ring.

18. Process according to one of claims 1 to 17, **characterised by**
a) the use of an ancillary extruder/side-arm extruder (204) for melting plastic and which is flange mounted at the beginning of the planetary roller extruder or planetary roller extruder section (202) or on the intermediate ring
or
b) the use of an ancillary extruder/side-arm extruder (204) for melting plastic and which is connected through a melt line with the beginning of the planetary roller extruder or planetary roller extruder section (202) or through the melt line with the intermediate ring.

19. Process according to claim 18, **characterised by** the use of a twin-screw extruder or twin-screw extruder section or single-screw extruder or single-screw section as the ancillary extruder/side-arm extruder (204) for melting the plastic.

20. Process according to claim 18 or 19,
**characterised by** the production of the blend
in a planetary roller extruder or planetary roller extruder section (202), wherein a plastic melt is produced in a side-arm extruder (204), wherein for the side arm extruder (204) a boring extends through the extruder housing and into the therein located connector of the planetary roller extruder or planetary roller extruder section (202),
wherein a supply housing or tube or insert extends into the boring and the boring has an enlargement in the region of the channels provided for the thermoregulation means, such that between the supply housing or tube or insert that extends into the boring and the inner wall of the boring there is a gap that forms a cavity and that the cavity connects the cooling-medium channels or heating-medium channels interrupted before by the boring and the supply housing or tube or insert.

21. Process according to claim 20, **characterised by** the use of an extruder housing that has a groove on the internally toothed connector located in the extruder housing in the region of the channels for the thermoregulation medium, said groove extending around the circumference of the connector over the total circumference or over a part of the circumference, and whose width is greater than the diameter of the supply housing or of the diameter of the tube used to supply material or insert.

22. Process according to claim 21, **characterised by** the use of an extruder housing, with an internal connector that on the exterior is provided with channels for a thermoregulation medium, and
with a boring that penetrates through the housing for the supply of melt,
in the area of penetration an insert is provided that has at least one connecting channel for the channels designed to convey thermoregulation media.

23. Process according to claim 22, **characterised by** the use of an extrusion housing with an internal connector that on the outside is provided with channels for a thermoregulation means, and has a connection bore for a side-arm extruder (204), wherein the channels for the thermoregulation means are guided around the connection bore.

## Revendications

1. Fabrication de mélanges de particules de bois et/ou d'autres particules végétales avec de la matière plastique dans une installation d'extrusion,
a) avec une partie de remplissage (201), une extrudeuse à rouleaux planétaires ou une section d'extrudeuse à rouleaux planétaires (202, 203) et une extrudeuse secondaire ou extrudeuse à bras latéral (204),
b) les particules de bois étant déposées dans la partie de remplissage (201) et introduites avec la partie de remplissage (201) dans l'extrudeuse à rouleaux planétaires ou la section d'extrudeuse à rouleaux planétaires (202, 203),
c) la matière plastique étant déposée en forme de granule dans l'extrudeuse secondaire ou l'extrudeuse à bras latéral (204), étant fondue dedans, et la masse fondue étant introduite séparément dans l'extrudeuse à rouleaux planétaires ou la section d'extrudeuse à rouleaux planétaires (202, 203),
d) les particules de bois étant mélangées dans l'extrudeuse à rouleaux planétaires ou la section d'extrudeuse à rouleaux planétaires (202, 203) avec la masse fondue et homogénéisées,
e) les particules de bois constituant dans le mélange au moins 60 % du poids, de préférence, au moins 65 % du poids,
f) ensuite, le mélange étant retiré de l'extrudeuse à rouleaux planétaires ou la section d'extrudeuse à rouleaux planétaires (202, 203), et,
g) le mélange étant comprimé, pressé à travers une buse d'extrusion de l'extrudeuse, qui se trouve dans le sens de transport de l'extrudeuse, à l'extrémité de l'extrudeuse.

2. Procédé selon la revendication 1, **caractérisé par** l'utilisation de particules de bois ou de particules végétales avec une taille de particule maximale de 1 mm, de préférence avec une taille de particule maximale de 0,8 mm, et de préférence encore, avec une quantité principale avec une taille de particule de 0,3 à 0,4 mm, la quantité principale constituant une part d'au moins 50 %, de préférence d'au moins 60 % de la quantité des particules de bois ou particules végétales.

3. Procédé selon la revendication 1 ou 2, **caractérisé en ce que** des ajouts comme des couleurs, coupleurs et agents d'adhérence, stabilisateurs, lubrifiants, agents hydrophobisants, sont mélangés avant le mélange avec les particules de bois ou les particules végétales, avec la masse fondue de matière plastique.

4. Procédé selon l'une des revendications 1 à 3, **caractérisé par** l'utilisation de particules de bois ou de particules végétales préchauffées.

5. Procédé selon la revendication 4, **caractérisé par** une température de préchauffage des particules de bois ou des particules végétales d'au moins 50 degrés Celsius, de préférence d'au moins 100 degrés Celsius, et de préférence encore, d'au moins 150 degrés Celsius.

6. Procédé selon la revendication 4 ou 5, **caractérisé par** le préchauffage des particules de bois ou des particules végétales en dehors de l'extrudeuse.

7. Procédé selon l'une des revendications 1 à 6, **caractérisé en ce que** le volume de l'espace creux des particules de bois et/ou des particules végétales est réduit par le compactage d'au moins 10 %, de préférence d'au moins 20 %, par rapport au volume initial.

8. Procédé selon l'une des revendications 1 à 6, **caractérisé en ce que** la masse fondue de matière plastique est ajoutée au début de l'extrudeuse à rouleaux planétaires ou de la section d'extrudeuse à rouleaux planétaires.

9. Procédé selon l'une des revendications 1 à 8, **caractérisé en ce que** la matière plastique liquéfiée séparément est amenée conjointement sous pression avec les particules de bois et/ou les particules végétales.

10. Procédé selon la revendication 9, **caractérisé en ce que** la matière plastique liquéfiée est pulvérisée contre les particules de bois et/ou les particules végétales.

11. Procédé selon l'une des revendications 1 à 10, **caractérisé en ce que** le mélange est traité dans une chaleur pour profilés et/ou **en ce que** le mélange extrudé est granulé.

12. Procédé selon l'une des revendications 1 à 12, **caractérisé par** l'utilisation d'une extrudeuse à une vis ou d'un module monovis en tant que partie de remplissage (204).

13. Procédé selon l'une ou plusieurs des revendications 1 à 12, **caractérisé par** l'utilisation d'extrudeuses à une vis (221, 222, 223) pour compression après mélange.

14. Procédé selon l'une des revendications 1 à 13, **caractérisé en ce que** la masse fondue est déposée entre la partie de remplissage (201) et l'extrudeuse à rouleaux planétaires ou la section d'extrudeuse à rouleaux planétaires (202, 203).

15. Procédé selon la revendication 14, **caractérisé par** l'utilisation d'une bague intermédiaire entre la partie de remplissage (201) et l'extrudeuse à rouleaux planétaires ou la section d'extrudeuse à rouleaux planétaires (202, 203), la masse fondue liquide étant introduite au niveau de la bague intermédiaire.

16. Procédé selon la revendication 15, **caractérisé par** l'utilisation d'une bague intermédiaire
a) qui copie les corps de la partie de remplissage (201) et/ou de l'extrudeuse à rouleaux planétaires ou plus précisément de la section d'extrudeuse à rouleaux planétaires (202, 203) et possède des collerettes, avec lesquelles la bague intermédiaire est fixée au niveau de la collerette avoisinante de la partie de remplissage (201) et au niveau de la collerette avoisinante de l'extrudeuse à rouleaux planétaires ou de la section d'extrudeuse à rouleaux planétaires (202, 203),
ou
b) qui est tenue seule entre l'extrudeuse à rouleaux planétaires ou plus précisément la section d'extrudeuse à rouleaux planétaires (202, 203) et la partie de remplissage (201) du fait que la collerette avoisinante de l'extrudeuse à rouleaux planétaires ou de la section d'extrudeuse à rouleaux planétaires (202) est serrée avec la collerette avoisinante de la partie de remplissage (201).

17. Procédé selon la revendication 15 ou 16, **caractérisé par** l'utilisation d'une bague intermédiaire, qui est en prise dans une ouverture de centrage dans la face frontale de la partie avoisinante ou inversement, l'extrudeuse à rouleaux planétaires ou la section d'extrudeuse à rouleaux planétaires (202) et la partie de remplissage (201) sont en prise dans une ouverture de centrage au niveau de la face frontale de la bague intermédiaire.

18. Procédé selon l'une des revendications 1 à 17, **caractérisé par**
a) l'utilisation d'une extrudeuse secondaire/extrudeuse à bras latéral (204) pour la fusion de la matière plastique, qui est bridée au début de l'extrudeuse à rouleaux planétaires ou de la section d'extrudeuse à rouleaux planétaires (202) ou au niveau de la bague intermédiaire,
ou
b) l'utilisation d'une extrudeuse secondaire/extrudeuse à bras latéral (204) pour la fusion de la matière plastique, qui est reliée par le biais d'une conduite de masse en fusion avec le début de l'extrudeuse à rouleaux planétaires ou de la section d'extrudeuse à rouleaux planétaires (202) ou par le biais d'une conduite de masse en fusion avec la bague intermédiaire.

19. Procédé selon la revendication 18, **caractérisé par** l'utilisation d'une extrudeuse à double vis ou d'une partie d'extrudeuse à double vis ou d'une extrudeuse à une vis ou d'une partie à une vis en tant qu'extrudeuse secondaire/extrudeuse à bras latéral (204) pour la fusion de la matière plastique.

20. Procédé selon la revendication 18 ou 19, **caractérisé par** la fabrication du mélange dans une extrudeuse à rouleaux planétaires ou une section d'extrudeuse à rouleaux planétaires (202), la masse fondue de matière plastique étant produite dans une extrudeuse à bras latéral (204), un perçage dépassant pour l'extrudeuse à bras latéral (204) à travers le corps de l'extrudeuse et dans la douille, placée dedans, de l'extrudeuse à rouleaux planétaires ou section d'extrudeuse à rouleaux planétaires (202), un boîtier d'amenée ou tuyau ou insert dépassant dans le perçage et le perçage possédant dans la zone des tubulures prévues pour l'agent de mise à température un élargissement, de sorte qu'entre le boîtier d'amenée dépassant dans le perçage ou le tuyau ou l'insert et la paroi interne du perçage, il existe un espacement qui forme un espace creux et que l'espace creux relie les tubulures d'agent refroidissant ou tubulures d'agent chauffant interrompues préalablement par le perçage ou plus précisément le boîtier d'amenée ou le tuyau ou l'insert.

21. Procédé selon la revendication 20, **caractérisé par** l'utilisation d'un corps d'extrudeuse qui possède une rainure au niveau de la douille dentée à l'intérieur placée dans le corps d'extrudeuse, dans la zone des tubulures pour l'agent de mise à température qui s'étend autour de la circonférence de la douille sur toute la circonférence ou sur une partie de la circonférence et dont la largeur est supérieure au diamètre du boîtier d'amenée ou du diamètre de tuyau servant à l'amenée du matériau ou de l'insert.

22. Procédé selon la revendication 21, **caractérisé par** l'utilisation d'un corps d'extrudeuse avec une douille placée intérieurement, qui est munie à l'extérieur de tubulures pour un agent de mise à température et avec un perçage traversant le corps pour l'amenée de la masse fondue, un insert étant prévu dans la zone de pénétration qui possède au moins une tubulure de liaison pour les tubulures destinées au passage de l'agent de mise en température.

23. Procédé selon la revendication 22, **caractérisé par** l'utilisation d'un corps d'extrudeuse avec une douille placée intérieurement, qui est munie à l'extérieur de tubulures pour un agent de mise en température et présente un perçage de raccordement pour une extrudeuse à bras latéral (204), les tubulures étant guidées autour du perçage de raccordement pour l'agent de mise à température.
